(19) **Europäisches Patentamt / European Patent Office / Office européen des brevets**

(11) **EP 2 598 572 B1**

(12) **EUROPEAN PATENT SPECIFICATION**

(45) Date of publication and mention of the grant of the patent:
**18.03.2020 Bulletin 2020/12**

(21) Application number: **11732551.4**

(22) Date of filing: **07.07.2011**

(51) Int Cl.:
*C08L 23/08* [(2006.01)]  *C08L 23/14* [(2006.01)]
*C08L 23/16* [(2006.01)]  *C10M 143/02* [(2006.01)]
*C10M 143/04* [(2006.01)]  *C10M 143/06* [(2006.01)]
*C10M 143/08* [(2006.01)]  *C10M 143/14* [(2006.01)]
*C08F 210/16* [(2006.01)]  *C08F 4/659* [(2006.01)]

(86) International application number:
**PCT/US2011/043206**

(87) International publication number:
**WO 2012/015576 (02.02.2012 Gazette 2012/05)**

(54) **ETHYLENE BASED COPOLYMER COMPOSITIONS AS VISCOSITY MODIFIERS AND METHODS FOR MAKING THEM**

COPOLYMERZUSAMMENSETZUNGEN AUF ETHYLENBASIS ALS VISKOSITÄTSMODIFIKATOREN UND VERFAHREN ZU IHRER HERSTELLUNG

COMPOSITIONS DE COPOLYMÈRE À BASE D'ÉTHYLÈNE EN TANT QU'ADJUVANTS DE VISCOSITÉ ET PROCÉDÉS DE FABRICATION DE CELLES-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.07.2010 US 368473 P**
**02.11.2010 EP 10189663**

(43) Date of publication of application:
**05.06.2013 Bulletin 2013/23**

(73) Proprietor: **ExxonMobil Chemical Patents Inc.**
**Baytown, TX 77520 (US)**

(72) Inventors:
• **DATTA, Sudhin**
  **Houston**
  **TX 77007 (US)**
• **KOLB, Rainer**
  **Kingwood**
  **TX 77345 (US)**
• **FARNG, Liehpao, O.**
  **Lawrenceville**
  **NJ 08648 (US)**

• **MINAK-BERNERO, Vera**
  **Bridgewater**
  **NJ 08807 (US)**
• **TSE, Mun, Fu**
  **Seabrook**
  **TX 77586 (US)**
• **SIROTA, Eric, B.**
  **Flemington**
  **NJ 08822 (US)**
• **SMIRNOVA, Diana**
  **High Bridge**
  **NJ 08829 (US)**

(74) Representative: **ExxonMobil Chemical Europe Inc.**
**IP Law Europe**
**Hermeslaan 2**
**1831 Machelen (BE)**

(56) References cited:
**WO-A1-2010/126721     US-A1- 2010 273 693**
**US-B2- 7 402 235**

**Description**

**FIELD OF THE INVENTION**

This disclosure relates to rheology modifiers and methods for making same. More particularly, this disclosure relates to compositionally disperse polymeric compositions and/or crystallinity disperse polymeric compositions that are useful in modifying the rheological properties of fluids and methods for making such compositions.

**BACKGROUND OF THE INVENTION**

Lubrication fluids are typically applied to moving surfaces to reduce friction between surfaces, thereby improving efficiency and reducing wear. Lubrication fluids are also typically used to dissipate heat generated by the moving surfaces. One type of lubrication fluid is a petroleum-based lubrication oil. Such lubrication oil is typically used for internal combustion engines. Lubrication oils contain additives that help the lubrication oil to have a certain viscosity at a given temperature.

In general, the viscosity of lubrication oils and fluids are inversely dependent upon temperature. When the temperature of lubrication fluids is increased, the viscosity of such fluids generally decreases, and when the temperature is decreased, the viscosity of such fluids generally increases. For internal combustion engines, it is desirable to have lower viscosity at low temperatures to facilitate engine starting during cold weather, and a higher viscosity at higher ambient temperatures when lubrication properties typically decline.

Additives for such lubrication fluids and oils include rheology modifiers, including viscosity index (VI) improvers. Components of VI improvers derived from ethylene-alpha-olefin copolymers modify the rheological behavior to increase the lubricant viscosity and promote a more constant viscosity over a wider range of temperatures. Such VI improvers with higher ethylene contents can improve oil thickening (TE) and shear stability, as measured by shear stability index ("SSI"). Higher ethylene content VI improvers, however, tend to flocculate or aggregate in oil formulations leading to highly viscous, flocculated materials that precipitate out of the lubrication fluid. These precipitates are apparent as regions (e.g., "lumps") of high viscosity or essentially complete solidification (e.g., "gels") and can lead to clogs and blockages of pumps and other passageways for the lubrication fluid and can lead to harm and in some causes failure of moving machinery.

Blends of amorphous and semi-crystalline ethylene-based copolymers have been used to overcome or mitigate the propensity towards the formation of high viscosity flocculated materials. See, e.g., U.S. Patent Nos. 7,402,235 and 5,391,617, and European Patent No. 0 638 611. There remains a need, however, for new rheology modifier compositions made from ethylene that are suitable for use in VI improvers that have high TE and good low temperature solution rheology properties.

**SUMMARY OF THE INVENTION**

Polymeric compositions and methods for making and using the same are provided. In at least one specific embodiment, the polymeric composition includes a first ethylene-based copolymer and a second ethylene-based copolymer. The first ethylene-based copolymer can have a weight percent of ethylene-derived units based on the weight of the first ethylene-based copolymer ($E_A$) ranging from 35 wt% to 52 wt% and a weight-average molecular weight ($Mw_A$) of less than or equal to 120,000. The second ethylene-based copolymer can have a weight percent of ethylene-derived units based on the weight of the second ethylene-based copolymer ($E_B$) ranging from 65 wt% to 85 wt% and a weight-average molecular weight ($Mw_B$) of from above 75,000 to less than 130,000.

In at least one other specific embodiment, the polymeric composition includes a first ethylene-based copolymer and a second ethylene-based copolymer. The first ethylene-based copolymer can have a heat of fusion on a first melt of the first ethylene-based copolymer ($H_A$) ranging from 0 J/g to 15 J/g and a weight-average molecular weight ($Mw_A$) of less than 120,000. The second ethylene-based copolymer can have a heat of fusion on a first melt of the second ethylene-based copolymer ($H_B$) ranging from 30 J/g to 60 J/g and a weight-average molecular weight ($Mw_B$) of from above 75,000 to less than 130,000.

In at least one specific embodiment, a lubrication oil composition includes a base oil and a polymeric composition. The polymeric composition includes a first ethylene-based copolymer and a second ethylene-based copolymer. The first ethylene-based copolymer can have a weight percent of ethylene-derived units based on the weight of the first ethylene-based copolymer ($E_A$) ranging from 35 wt% to 52 wt% and a weight-average molecular weight ($Mw_A$) of less than or equal to 120,000. The second ethylene-based copolymer can have a weight percent of ethylene-derived units based on the weight of the second ethylene-based copolymer ($E_B$) ranging from 65 wt% to 85 wt% and a weight-average molecular weight ($Mw_B$) of from above 75,000 to less than 130,000.

In at least one specific embodiment, a lubrication oil composition includes a base oil and a polymeric composition. The polymeric composition includes a first ethylene-based copolymer and a second ethylene-based copolymer. The first ethylene-based copolymer can have a heat of fusion on a first melt of the first ethylene-based copolymer ($H_A$) ranging from 0 J/g to 15 J/g and a weight-average molecular weight ($Mw_A$) of less than 120,000. The second ethylene-based copolymer can have a heat of fusion on a first melt of the second ethylene-based copolymer ($H_B$) ranging from 30 J/g to 60 J/g and a weight-average molecular weight ($Mw_B$) of from above 75,000 to less than or equal to 130,000.

## DETAILED DESCRIPTION OF THE INVENTION

Rheology modifier compositions or "polymeric compositions" made from ethylene-based copolymers that are suitable for use in VI improvers are provided. The ethylene-based copolymers provided herein exhibit surprisingly increased TE and SSI with excellent low temperature viscosity performance and/or pour point. The ethylene-based copolymers can include two or more compositionally disperse polymeric compositions and/or two or more crystallinity disperse polymeric compositions. The compositionally disperse polymeric composition are formed from at least two discrete ethylene-based copolymers having different ethylene contents, heats of fusion, molecular weights (Mn and Mw), melt index and intermolecular composition distribution, and any combination thereof. The crystallinity disperse polymeric compositions can be formed from at least two discrete ethylene-based copolymers having different values of residual crystallinity.

Not wishing to be bound by theory, it is believed that the distribution of the monomers and the chain architecture are controlled and segregated into at least two compositionally disperse or crystallinity disperse polymeric populations. These disperse polymeric populations can be formed by a synthesis process that employs metallocene-based catalysts. And contrary to conventional thought, there is a preferred relationship between the amount and composition of the discrete distributions of the ethylene-based copolymers.

### Definitions

For purposes of this inventions and the claims thereto, the definitions set forth below are used.

As used herein, the term "complex viscosity" means a frequency-dependent viscosity function determined during forced small amplitude harmonic oscillation of shear stress, in units of Pascal-seconds, that is equal to the difference between the dynamic viscosity and the out-of-phase viscosity (imaginary part of complex viscosity).

As used herein, the term "Composition Distribution Breadth Index" (CDBI) is defined in U.S. Patent No. 5,382,630. CDBI is defined as the weight percent of the copolymer molecules having a comonomer content within 50% of the median total molar comonomer content. The CDBI of a copolymer is readily determined utilizing well known techniques for isolating individual fractions of a sample of the copolymer. One such technique is Temperature Rising Elution Fraction (TREF), as described in L. Wild, et al., "Determination of Branching Distributions in Polyethylene and Ethylene Copolymers," JOURNAL OF POLYMER SCIENCE: POLYMER PHYSICS EDITION, Vol. 20, pp. 441-455 (1982) and U.S. Patent No. 5,008,204.

As used herein, the term "compositionally disperse" means a polymeric composition comprised of at least two discrete compositions of ethylene-based copolymers.

As used herein, the term "copolymer" includes any polymer having two or more monomers.

As used herein, the term "crystallinity disperse" means a polymeric composition comprised of at least two ethylene-based copolymers having two discrete values of residual crystallinity.

As used herein, the term "disperse" means that the compositions include constituent polymer fractions which have different compositions and/or different crystallinity due, in part, to different molecular weight distributions, and/or different monomer compositional or sequence distributions.

As used herein, the term "$E_A$" means the weight percent of ethylene-derived units of the first ethylene-based copolymer based on the weight of the first ethylene-based copolymer.

As used herein, the term "$E_B$" means the weight percent of ethylene-derived units of the second ethylene-based copolymer based on the weight of the second ethylene-based copolymer.

As used herein, the term "ethylene-based copolymer" means an ethylene-based copolymer comprised of ethylene and one or more comonomers.

As used herein, the term "$H_A$" means the heat of fusion in units of joules/gram on a first melt of the first ethylene-based copolymer.

As used herein, the term "$H_B$" means the heat of fusion in units of joules/gram on the first melt of the second ethylene-based copolymer.

As used herein, the term "intermolecular composition distribution," (InterCD or intermolecular CD), defines the compositional heterogeneity in terms of ethylene content, among polymer chains. It is expressed as the minimum deviation, analogous to a standard deviation, in terms of weight percent ethylene from the average ethylene composition for a given copolymer sample needed to include a given weight percent of the total copolymer sample, which is obtained by excluding equal weight fractions from both ends of the distribution. The deviation need not be symmetrical. When expressed as a single number, for example, an intermolecular composition distribution of 15 wt% shall mean the larger of the positive or negative deviations. For example, at 50 wt% intermolecular composition distribution the measurement is akin to conventional composition distribution breadth index.

As used herein, the term "intramolecular composition distribution" (IntraCD or intramolecular CD) defines the compositional variation, in terms of ethylene, within a copolymer chain. It is expressed as the ratio of the alpha-olefin to ethylene along the segments of the same chain.

As used herein, the term "$MI_A$" means the melt index in units of g/10 min or dg/min of the first ethylene-based copolymer.

As used herein, the term "$MI_B$" means the melt index in units of g/10 min or dg/min of the second ethylene-based copolymer.

As used herein, the term "$Mn_A$" means the number-average molecular weight of the first ethylene-based copolymer as measured by GPC.

As used herein, the term "$Mn_B$" means the number-average molecular weight of the second ethylene-based copolymer as measured by GPC.

As used herein, the term "$Mw_A$" means the weight-average molecular weight of the first ethylene-based copolymer in units of grams/mole in terms of polystyrene, as measured by GPC.

As used herein, the term "$Mw_B$" means the weight-average molecular weight of the second ethylene-based copolymer in units of grams/mole in terms of polystyrene, as measured by GPC.

As used herein, the term "MWD" means the ratio of Mw to Mn.

As used herein, the term "melting point" means the highest peak among principal and secondary melting peaks as determined by DSC during the second melt, as discussed herein.

As used herein, the term "polyene" means monomers or polymers having two or more unsaturations, e.g., dienes, trienes, and the like.

As used herein, the term "polypropylene" means a polymer made of at least 50% propylene units, preferably at least 70% propylene units, more preferably at least 80% propylene units, even more preferably at least 90% propylene units, even more preferably at least 95% propylene units or 100% propylene units.

As used herein, the term "substantially linear structure" means that the first ethylene-based copolymer and/or the second ethylene-based copolymer is characterized as having less than 1 branch point pendant with a carbon chain larger than 19 carbon atoms per 200 carbon atoms along a backbone.

When a polymer or copolymer is referred to as comprising an olefin, including, but not limited to ethylene, propylene, and butene, the olefin present in such polymer or copolymer is the polymerized form of the olefin.

## Polymeric Compositions

The rheology modifier composition includes at least one first ethylene-based copolymer and at least one second ethylene-based copolymer. The first ethylene-based copolymer includes ethylene and at least one alpha-olefin comonomer, and optionally one or more internal olefins, and optionally one or more polyenes. Similarly, the second ethylene-based copolymer includes ethylene and at least one alpha-olefin comonomer, and optionally one or more internal olefins, and optionally one or more polyenes. The first and second ethylene-based copolymers, however, have different ethylene contents, heats of fusion, molecular weights (Mn and Mw), melt index, intermolecular composition distribution, and/or crystallinity. Unless otherwise specified, all references to a first ethylene-based copolymer and a second ethylene-based copolymer refer to both the compositionally disperse polymeric compositions and the crystallinity disperse polymeric compositions.

The $E_A$ in wt% of the first ethylene-based copolymer is preferably in the range of $35 \leq E_A \leq 55$; in some embodiments, in the range of $40 \leq E_A \leq 53$; in other embodiments, in the range of $45 \leq E_A \leq 53$; and in still yet other embodiments $E_A$ is in the range of $47 \leq E_A \leq 52$. The first ethylene-based copolymer can have a weight percent of ethylene-derived units based on the weight of the first ethylene-based copolymer ($E_A$) ranging from a low of 30 wt%, 33 wt%, 35 wt%, 37 wt%, or 40 wt% to a high of 45 wt%, 47 wt%, 50 wt%, 52 wt%, or 54 wt%.

The $E_B$ in wt% of the second ethylene-based copolymer is in the range of $35 \leq E_B \leq 85$; in some embodiments, in the range of $55 \leq E_B \leq 80$; in other embodiments, in the range of $65 \leq E_B \leq 80$; in still other embodiments, in the range of $67 \leq E_B \leq 80$; and still yet other embodiments $67 \leq E_B \leq 77$; and still yet other embodiments $E_B$ is 73. The second ethylene-based copolymer can have a weight percent of ethylene-derived units based on the weight of the second ethylene-based copolymer ($E_B$) ranging from a low of 60 wt%, 63 wt%, 65 wt%, 67 wt%, or 70 wt% to a high of 80 wt%, 83 wt%, 85 wt%, or 87 wt%.

In some embodiments, the ethylene weight percent $E_A$ of the first ethylene-based copolymer may be less than the ethylene weight percent $E_B$ of the second ethylene-based copolymer for the polymeric composition. In some embodiments, the compositionally disperse polymeric compositions may be characterized by the difference in the ethylene weight percent, $E_B$ and $E_A$. In some embodiments, $E_B - E_A \geq 12$; in other embodiments, $E_B - E_A \geq 17$; in still other embodiments, $E_B - E_A \geq 21$; in still yet other embodiments, $E_B - E_A \geq 23$. In some embodiments, the difference in ethylene weight percent, $E_B$ and $E_A$, is in the range of $17 \leq E_B - E_A \leq 23$; in other embodiments, the difference in $E_B$ and $E_A$ is 21. The difference between the weight percent of ethylene-derived units of the second ethylene-based copolymer based on the weight of the second ethylene-based copolymer and the weight percent of the ethylene-derived units in the first ethylene-based copolymer based on the weight of the second ethylene-based copolymer can range from a low of 12, 14, 16, or 18 to a high of 20, 22, 23, or 24.

The $H_A$ of the first ethylene-based copolymer is in the range of $0 \leq H_A \leq 30$; in some embodiments, in the range of $0 \leq H_A \leq 15$; in other embodiments, in the range of $0 \leq H_A \leq 10$; in still other embodiments, in the range of $0 \leq H_A \leq 5$; and in still yet other embodiments, $H_A$ is 2. In one or more embodiments, the first ethylene-based copolymer can have a heat of fusion on a first melt of the first ethylene-based copolymer ($H_A$) ranging from a low of 0 J/g, 1 J/g, or 2 J/g to a high of 8 J/g, 9 J/g, or 10 J/g.

The $H_B$ of the second ethylene-based copolymer is in the range of $30 < H_B \leq 60$; in some embodiments, in the range of $35 < H_B \leq 55$; in other embodiments, in the range of $40 < H_B \leq 50$; and still yet other embodiments $H_B$ is 45. In one or more embodiments, the second ethylene-based copolymer can have a heat of fusion on a first melt of the second ethylene-based copolymer ($H_B$) ranging from a low of 30 J/g, 33 J/g, 35 J/g, or 37 J/g to a high of 47 J/g, 50 J/g, 53 J/g, 57 J/g, or 60 J/g.

In some embodiments, the heat of fusion $H_A$ of the first ethylene-based copolymer may be less than the heat of fusion $H_B$ of the second ethylene-based copolymer. In some embodiments, the crystallinity disperse polymeric compositions may be characterized by the difference in the heat of fusion, $H_B$ and $H_A$. In some embodiments, $H_B - H_A \geq 4$; in other embodiments, $H_B - H_A \geq 8$; in still other embodiments, $H_B - H_A \geq 12$; in still yet other embodiments, $H_B - H_A \geq 16$. In some embodiments, the difference in the heat of fusion, $H_B$ and $H_A$, is in the range of $8 \leq H_B - H_A \leq 10$; in other embodiments, the difference in $H_B$ and $H_A$ is 9.

The first ethylene-based copolymer may be characterized by a weight-average molecular weight ($Mw_A$) of less than 120,000, or less than 110,000, or less than 100,000, or less than 90,000, or less than 80,000, or less than 70,000. Preferably, the $Mw_A$ is from 70,000 to 95,000. In one or more embodiments, the first ethylene-based copolymer can have a weight-average molecular weight ($Mw_A$) ranging from a low of 60,000, 65,000, 70,000, or 75,000 to a high of 90,000, 95,000, 100,000, 105,000, or 115,000.

The second ethylene-based copolymer may be characterized by a weight-average molecular weight ($Mw_B$) of less than 130,000, or less than 120,000, or less than 110,000, or less than 100,000, or less than 90,000, or less than 80,000. Preferably, the $Mw_B$ is from 75,000 to 95,000. In one or more embodiments, the second ethylene-based copolymer can have a weight-average molecular weight ($Mw_B$) ranging from a low of 75,000 to a high of 90,000, 95,000, 100,000, 105,000, or 115,000.

In some embodiments, $MI_A/MI_B$ is less than or equal to 3, less than or equal to 2, less than or equal to 1. The ratio of the melt index of the first ethylene-based copolymer ($MI_A$) to the melt index of the second ethylene-based copolymer ($MI_B$) of the polymeric composition can be less than 3.0, less than 2.8, less than 2.6, less than 2.4, less than 2.2, less than 1.8, or less than 1.6.

The compositionally disperse and/or crystallinity disperse polymeric compositions may be further characterized by the absolute value of the difference in the melt index of the first ethylene-based copolymer $MI_A$ and the melt index of the second ethylene-based copolymer $MI_B$. In some embodiments, $|MI_A - MI_B| \leq 3.0$; in other embodiments, $|MI_A - MI_B| \leq 2.5$; in still yet other embodiments, $|MI_A - MI_B| \leq 2.0$; in still yet other embodiments, $|MI_A - MI_B| \leq 1.5$; in still yet other embodiments, $|MI_A - MI_B| \leq 1.1$; and still yet other embodiments, $|MI_A - MI_B| \leq 1.0$.

The melt flow rate (MFR) of the compositionally disperse and/or crystallinity disperse polymeric compositions will be intermediate to the MFR of the lower and higher ethylene content copolymers when these copolymers have different MFRs. The lower ethylene content copolymer can have an MFR of from 0.2 to 25. The higher ethylene content copolymer can have an MFR of from 0.2 to 25.

The first and/or second ethylene-based copolymers can have a MWD of less than 3.0, or less than 2.4, or less than 2.2, or less than 2.0. Preferably, the MWD for the first ethylene-based copolymer and/or the second ethylene-based copolymer is in the range of greater than or equal to 1.80 to less than or equal to 1.95.

In some embodiments, the comonomer insertion sequences of the first ethylene-based copolymer and the second copolymer polymer fractions can be the same or different. The insertion sequences can provide linear polymer structure or substantially linear polymer structure. The substantially linear structure of either the first ethylene-based copolymer and/or the second ethylene-based copolymer has less than 1 branch point pendant with a carbon chain larger than 19 carbon atoms per 200 carbon atoms along a backbone, less than 1 branch point pendant with a carbon chain larger than 19 carbon atoms per 300 branch points, less than 1 branch point pendant with a carbon chain larger than 19 carbon atoms per 500 carbon atoms, and preferably less than 1 branch point pendant with a carbon chain larger than 19 carbon atoms per 1000 carbon atoms notwithstanding the presence of branch points due to incorporation of the comonomer.

## Comonomer Components

Suitable comonomers include, but are not limited to, propylene ($C_3$) and other alpha-olefins, such as $C_4$ to $C_{20}$ alpha-olefins (also referred to herein as "a-olefins"), and preferably propylene and $C_4$ to $C_{12}$ $\alpha$-olefins. The first and second ethylene-based copolymer each contain at least one $C_3$ to $C_{20}$ $\alpha$-olefin comonomer. The $\alpha$-olefin comonomer can be linear or branched, and two or more comonomers can be used, if desired. Thus, reference herein to "an alpha-olefin comonomer" includes one, two, or more alpha-olefin comonomers.

Examples of suitable comonomers include propylene, linear $C_4$ to $C_{12}$ $\alpha$-olefins, and $\alpha$-olefins having one or more $C_1$ to $C_3$ alkyl branches. Specific examples include: propylene; 1-butene; 3-methyl-1-butene; 3,3-dimethyl-1-butene; 1-pentene; 1-pentene with one or more methyl, ethyl or propyl substituents; 1-hexene with one or more methyl, ethyl or propyl substituents; 1-heptene with one or more methyl, ethyl or propyl substituents; 1-octene with one or more methyl, ethyl or propyl substituents; 1-nonene with one or more methyl, ethyl or propyl substituents; ethyl, methyl or dimethyl-substituted 1-decene, or 1-dodecene. Preferred comonomers include: propylene, 1-butene, 1-pentene, 3-methyl-1-butene, 1-hexene, 3-methyl-1-pentene, 4-methyl-1-pentene, 3,3-dimethyl-1-butene, 1-heptene, 1-hexene with a methyl substituents on any of $C_3$ to $C_5$, 1-pentene with two methyl substituents in any stoichiometrically acceptable combination on $C_3$ or $C_4$, 3-ethyl-1-pentene, 1-octene, 1-pentene with a methyl substituents on any of $C_3$ or $C_4$, 1-hexene with two methyl substituents in any stoichiometrically acceptable combination on $C_3$ to $C_5$, 1-pentene with three methyl substituents in any stoichiometrically acceptable combination on $C_3$ or $C_4$, 1-hexene with an ethyl substituents on $C_3$ or $C_4$, 1-pentene with an ethyl substituents on $C_3$ and a methyl substituents in a stoichiometrically acceptable position on $C_3$ or $C_4$, 1-decene, 1-nonene, 1-nonene with a methyl substituents on any of $C_3$ to $C_9$, 1-octene with two methyl substituents in any stoichiometrically acceptable combination on $C_3$ to $C_7$, 1-heptene with three methyl substituents in any stoichiometrically acceptable combination on $C_3$ to $C_6$, 1-octene with an ethyl substituents on any of $C_3$ to $C_7$, 1-hexene with two ethyl substituents in any stoichiometrically acceptable combination on $C_3$ or $C_4$, and 1-dodecene.

Other suitable comonomers can include internal olefins. Preferred internal olefins are cis 2- butene and trans 2- butene. Other internal olefins are contemplated. When an internal olefin is present, negligible amounts, such as 2 wt% or less of the total amount of the internal olefin, can be present in the low ethylene-content copolymer, and most of the internal olefin, such as 90 wt% or more of the total amount of the internal olefin, can be present in the high ethylene-content copolymer.

Suitable comonomers can also include one or more polyenes. Suitable polyenes can include non-conjugated dienes, preferably those that are straight chain, hydrocarbon diolefins or cycloalkenyl-substituted alkenes, having 6 to 15 carbon atoms, for example: (a) straight chain acyclic dienes, such as 1,4-hexadiene and 1,6-octadiene; (b) branched chain acyclic dienes, such as 5-methyl-1, 4-hexadiene; 3,7-dimethyl-1,6; (c) single ring alicyclic dienes, such as 1,4-cyclohexadiene; 1,5-cyclo-octadiene and 1,7-cyclododecadiene; (d) multi-ring alicyclic fused and bridged ring dienes, such as tetrahydroindene, norbornadiene, methyl-tetrahydroindene, dicyclopentadiene (DCPD), bicyclo-(2.2.1)-hepta-2,5-diene, alkenyl, alkylidene, cycloalkenyl and cycloalkylidene norbornenes, such as 5-methylene-2-norbornene (MNB), 5-propenyl-2-norbornene, 5-isopropylidene-2-norbornene, 5-(4-cyclopentenyl)-2-norbornene, 5-cyclohexylidene-2-norbornene, and 5-vinyl-2-norbornene (VNB); and (e) cycloalkenyl-substituted alkenes, such as vinyl cyclohexene, allyl cyclohexene, vinyl cyclooctene, 4-vinyl cyclohexene, allyl cyclodecene; and vinyl cyclododecene. Of the non-conjugated dienes typically used, the preferred dienes are dicyclopentadiene (DCPD), 1,4-hexadiene, 1,6-octadiene; 5-methyl-1,4-hexadiene; 3,7-dimethyl-1,6-octadiene; 5-methylene-2-norbornene, 5-ethylidene-2-norbornene (ENB), and tetracyclo ($\Delta$-11,12) 5,8 dodecene. It is preferred to use dienes which do not lead to the formation of long chain branches, and non- or lowly branched polymer chains are preferred. Other polyenes that can be used include cyclopentadiene and octatetra-ene; and the like.

When a polyene is present, the ethylene-based copolymers can include up to 5 mol%, up to 4 mol%, up to 3 mol%, up to 2 mol%, and up to 1 mol% polyene-derived units. In some embodiments, the amount of polyene, when present, can range from 0.5 mol% to 4 mol%; 1.0 mol% to 3.8 mol%; or 1.5 mol% to 2.5 mol%.

## Resulting Composition Blend

The discrete ethylene-based copolymers can be combined such that the less crystalline ethylene-based copolymer (typically the ethylene-based copolymer with a lower wt% ethylene) can be present in an amount no greater than 66 wt%, based on the combined weight of the first and second ethylene-based copolymers. The first and second ethylene-based copolymers can also be combined in a predetermined weight ratio such that the ethylene-based copolymer with greater crystallinity (typically the ethylene-based copolymer with a higher wt% ethylene) can be present in an amount no less than 44 wt%, based on the combined weight of the first and second ethylene-based copolymers. In one or more embodiments, the less crystalline ethylene-based copolymer can be present in an amount less than 65 wt%, less than 60 wt%, less than 55 wt%, less than 50 wt%, or less than 45 wt%, based on the combined weight of the first and second ethylene-based copolymers.

The polymeric composition can have a concentration or content of ethylene-derived units ranging from about 70 mol% to 85 mol%. For example, the polymeric composition can have a concentration of ethylene-derived units ranging from a low of 70 mol%, 72 mol%, or 74 mol% to a high of 78 mol%, 80 mol%, 83 mol%, or 85 mol%. The MFR of the polymeric composition can be intermediate to the MFR of the lower and higher ethylene content copolymers when the first and second copolymers have different MFRs.

The lower ethylene content copolymer, i.e., the first ethylene-based copolymer, can have a concentration or content of ethylene-derived units ranging from 50 mol% to 70 mol% and a content of comonomer-derived units ranging from 50 mol% to 30 mol%. The lower ethylene content copolymer can also have an MFR ranging from 0.2 to 25. The lower ethylene content copolymer can also have a molecular weight distribution (Mw/Mn) of from 1.5 to 3.

The amount of ethylene-derived units in the higher ethylene content copolymer, i.e., the second ethylene-based copolymer, can be greater than 70 mol%, greater than 74 mol%, or greater than 78 mol%. The higher ethylene content copolymer can also have an MFR ranging from 0.2 to 25. The higher ethylene content copolymer can also have a molecular weight distribution (Mw/Mn) ranging from 1.5 to 3.

## Catalyst

The terms "metallocene" and "metallocene catalyst precursor," as used herein, refer to compounds possessing a transition metal M, with cyclopentadienyl (Cp) ligands, at least one non-cyclopentadienyl-derived ligand X, and zero or one heteroatom-containing ligand Y, the ligands being coordinated to M and corresponding in number to the valence thereof. The metallocene catalyst precursors are generally neutral complexes but when activated with a suitable co-catalyst yield an active metallocene catalyst which refers generally to an organometallic complex with a vacant coordination site that can coordinate, insert, and polymerize olefins. The metallocene catalyst precursor is preferably one of, or a mixture of metallocene compounds, of either or both of the following types:

(1) cyclopentadienyl (Cp) complexes which have two Cp ring systems for ligands. The Cp ligands form a sandwich complex with the metal and can be free to rotate (unbridged) or locked into a rigid configuration through a bridging group. The Cp ring ligands can be like or unlike unsubstituted, substituted, or a derivative thereof such as a heterocyclic ring system which may be substituted, and the substitutions can be fused to form other saturated or unsaturated rings systems such as tetrahydroindenyl, indenyl, or fluorenyl ring systems. These cyclopentadienyl complexes have the general formula:

$$(Cp^1R^1_m)R^3_n(Cp^2R^2_p)MX_q$$

where $Cp^1$ of ligand $(Cp^1R^1_m)$ and $Cp^2$ of ligand $(Cp^2R^2_p)$ are the same or different cyclopentadienyl rings; $R^1$ and $R^2$ each is, independently, a halogen or a hydrocarbyl, halocarbyl, hydrocarbyl-substituted organometalloid or halocarbyl-substituted organometalloid group containing up to 20 carbon atoms; m is 0 to 5; p is 0 to 5; and two $R^1$ and/or $R^2$ substituents on adjacent carbon atoms of the cyclopentadienyl ring associated there with can be joined together to form a ring containing from 4 to 20 carbon atoms; $R^3$ is a bridging group; n is the number of atoms in the direct chain between the two ligands and is 0 to 8, preferably 0 to 3; M is a transition metal having a valence of from 3 to 6, preferably from group 4, 5, or 6 of the periodic table of the elements and is preferably in its highest oxidation state; each X is a non-cyclopentadienyl ligand and is, independently, a halogen or a hydrocarbyl, oxyhydrocarbyl, halocarbyl, hydrocarbyl-substituted organometalloid, oxyhydrocarbyl-substituted organometalloid or halocarbyl-substituted organometalloid group containing up to 20 carbon atoms; q is equal to the valence of M minus 2;

(2) monocyclopentadienyl complexes which have only one Cp ring system as a ligand. The Cp ligand forms a half-sandwich complex with the metal and can be free to rotate (unbridged) or locked into a rigid configuration through a bridging group to a heteroatom-containing ligand. The Cp ring ligand can be unsubstituted, substituted, or a derivative thereof such as a heterocyclic ring system which may be substituted, and the substitutions can be fused to form other saturated or unsaturated rings systems such as tetrahydroindenyl, indenyl, or fluorenyl ring systems. The heteroatom containing ligand is bound to both the metal and optionally to the Cp ligand through the bridging group. The heteroatom itself is an atom with a coordination number of three from group VA or VIA of the periodic table of the elements. These mono-cyclopentadienyl complexes have the general formula:

$$(Cp^1R^1_m)R^3_n(Y_rR^2) MX_s$$

wherein $R^1$ is, each independently, a halogen or a hydrocarbyl, halocarbyl, hydrocarbyl-substituted organometalloid or halocarbyl-substituted organometalloid group containing up to 20 carbon atoms; m is 0 to 5; and two $R^1$ substituents on adjacent carbon atoms of the cyclopentadienyl ring associated therewith can be joined together to form a ring containing from 4 to 20 carbon atoms; $R^3$ is a bridging group; n is 0 to 3; M is a transition metal having a valence of from 3 to 6, preferably from group 4, 5, or 6 of the periodic table of the elements and is preferably in its highest oxidation state; Y is a heteroatom containing group in which the heteroatom is an element with a coordination number of three from Group VA or a coordination number of two from group VIA preferably nitrogen, phosphorous, oxygen, or sulfur; $R^2$ is a radical selected from a group consisting of $C_1$ to $C_{20}$ hydrocarbon radicals, substituted $C_1$ to $C_{20}$ hydrocarbon radicals, where one or more hydrogen atoms is replaced with a halogen atom, and when Y is three coordinate and unbridged there may be two R groups on Y each independently a radical selected from a group consisting of $C_1$ to $C_{20}$ hydrocarbon radicals, substituted $C_1$ to $C_{20}$ hydrocarbon radicals, where one or more hydrogen atoms is replaced with a halogen atom, and each X is a non-cyclopentadienyl ligand and is, independently, a halogen or a hydrocarbyl, oxyhydrocarbyl, halocarbyl, hydrocarbyl-substituted organometalloid, oxyhydrocarbyl-substituted organometalloid or halocarbyl-substituted organometalloid group containing up to 20 carbon atoms; s is equal to the valence of M minus 2.

Examples of suitable biscyclopentadienyl metallocenes of the type described in group 1 above can be as discussed and described in U.S. Patent Nos. 5,324,800; 5,198,401; 5,278,119; 5,387,568; 5,120,867; 5,017,714; 4,871,705; 4,542,199; 4,752,597; 5,132,262; 5,391,629; 5,243,001; 5,278,264; 5,296,434; and 5,304,614.

## Non-coordinating Anions

The term "noncoordinating anion" (NCA) means an anion which either does not coordinate to the transition metal cation or which is only weakly coordinated to the cation thereby remaining sufficiently labile to be displaced by a neutral Lewis base. "Compatible" noncoordinating anions are those which are not degraded to neutrality when the initially formed complex decomposes. Further, the anion will not transfer an anionic substituents or fragment to the cation so as to cause it to form a neutral four coordinate metallocene compound and a neutral by-product from the anion. Non-coordinating anions useful in accordance with this invention are those which are compatible, stabilize the metallocene cation in the sense of balancing its ionic charge in a +1 state, and yet retain sufficient lability to permit displacement by an ethylenically or acetylenically unsaturated monomer during polymerization. Additionally, the anions useful in this invention will be large or bulky in the sense of sufficient molecular size to largely inhibit or prevent neutralization of the metallocene cation by Lewis bases other than the polymerizable monomers that may be present in the polymerization process. Typically the anion will have a molecular size of greater than or equal to about 4 angstroms. NCAs are preferred because of their ability to produce a target molecular weight polymer at a higher temperature than tends to be the case with other activation systems such as alumoxane.

Descriptions of ionic catalysts for coordination polymerization using metallocene cations activated by non-coordinating anions appear in the early work in EP-A-0 277 003, EP-A-0 277 004, WO 92/00333 and U.S. Patent Nos. 5,198,401 and 5,278,119. These references disclose a preferred method of preparation where metallocenes (bisCp and monoCp) are protonated by an anionic precursors such that an alkyl/hydride group is abstracted from a transition metal to make it both cationic and charge-balanced by the non-coordinating anion. The use of ionizing ionic compounds not containing an active proton but capable of producing both the active metallocene cation and a noncoordinating anion are also known. *See, e.g.,* EP-A-0 426 637, EP-A-0 573 403 and U.S. Patent No. 5,387,568. Reactive cations other than Bronsted acids capable of ionizing the metallocene compounds include ferrocenium triphenylcarbonium and triethylsilylinium cations. Any metal or metalloid capable of forming a coordination complex which is resistant to degradation by water (or other Bronsted or Lewis Acids) may be used or contained in the anion of the second activator compound. Suitable metals include, but are not limited to, aluminum, gold, platinum and the like. Suitable metalloids include, but are not limited to, boron, phosphorus, silicon and the like.

An additional method for making the ionic catalysts uses ionizing anionic precursors which are initially neutral Lewis acids but form the cation and anion upon ionizing reaction with the metallocene compounds, for example, tris(pentafluorophenyl) boron acts to abstract an alkyl, hydride or silyl ligand to yield a metallocene cation and stabilizing non-coordinating anion. *See, e.g.,* EP-A-0 427 697 and EP-A-0 520 732. Ionic catalysts for addition polymerization can also be prepared by oxidation of the metal centers of transition metal compounds by anionic precursors containing metallic oxidizing groups along with the anion groups. *See, e.g.,* EP-A-0 495 375.

## Non-ionic Activators

Where the metal ligands include halide moieties, for example, (methyl-phenyl) silylene (tetra-methyl-cyclopentadienyl) (tert-butyl-amido) zirconium dichloride, which are not capable of ionizing abstraction under standard conditions, they can be converted via known alkylation reactions with organometallic compounds such as lithium or aluminum hydrides or alkyls, alkylalumoxanes, Grignard reagents, etc. *See, e.g.,* EP-A-0 500 944, EP-A1-0 570 982 and EP-A1-0 612 768 for processes describing the reaction of alkyl aluminum compounds with dihalide substituted metallocene compounds prior to or with the addition of activating anionic compounds. For example, an aluminum alkyl compound may be mixed with the metallocene prior to its introduction into the reaction vessel. Since the alkyl aluminum is also suitable as a scavenger its use in excess of that normally stoichiometrically required for alkylation of the metallocene will permit its addition to the reaction solvent with the metallocene compound. Normally, alumoxane would not be added with the metallocene so as to avoid premature activation, but can be added directly to the reaction vessel in the presence of the polymerizable monomers when serving as both scavenger and alkylating activator. Alumoxanes may also fulfill a scavenging function.

Known alkylalumoxanes are additionally suitable as catalyst activators, particularly for those metallocenes comprising halide ligands. The alumoxane component useful as catalyst activator typically is an oligomeric aluminum compound represented by the general formula (R--Al--O) n, which is a cyclic compound, or $R(R\text{--}Al\text{--}O)_nAlR_2$, which is a linear compound. In the general alumoxane formula R is a $C_1$ to $C_5$ alkyl radical, for example, methyl, ethyl, propyl, butyl or pentyl, and "n" is an integer from 1 to 50. Most preferably, R is methyl and "n" is at least 4, *i.e.*, methylalumoxane (MAO). Alumoxanes can be prepared by various procedures known in the art. For example, an aluminum alkyl may be treated with water dissolved in an inert organic solvent, or it may be contacted with a hydrated salt, such as hydrated copper sulfate suspended in an inert organic solvent, to yield an alumoxane. Generally, however prepared, the reaction of an aluminum alkyl with a limited amount of water yields a mixture of the linear and cyclic species of the alumoxane.

## Polymerization Process

Each discrete ethylene-based copolymer can be polymerized in a single, well stirred tank reactor in solution. The viscosity of the solution during polymerization can be less than 10000cps, or less than 7000cps, and preferably less than 500cps. The reactor is preferably a liquid filled, continuous flow, stirred tank reactor providing full back mixing for random copolymer production. Solvent, monomers, and catalyst(s) are fed to the reactor. When two or more reactors are utilized, solvent, monomers, and/or catalyst(s) is fed to the first reactor or to one or more additional reactors.

Reactors may be cooled by reactor jackets or cooling coils, autorefrigeration, prechilled feeds or combinations of all three to absorb the heat of the exothermic polymerization reaction. Autorefrigerated reactor cooling requires the presence of a vapor phase in the reactor. Adiabatic reactors with prechilled feeds are preferred in which the polymerization exotherm is absorbed by permitting a temperature rise of the polymerizing liquid.

Use of hydrogen to control molecular weight may be avoided or reduced, if desired. The reactor temperature may be used to control the molecular weight of the polymer fraction produced. In series operation, this gives rise to a temperature difference between reactors which is helpful for controlling polymer molecular weight.

Reactor temperature can be selected depending upon the effect of temperature on catalyst deactivation rate and polymer properties and/or extent of monomer depletion. When using more than one reactor, generally temperatures should not exceed the point at which the concentration of catalyst in the second reactor is insufficient to make the desired polymer component in the desired amount. Therefore, reaction temperature can be determined by the details of the catalyst system.

In general, a single reactor or first reactor in a series will operate at a reactor temperature from 0°C to 200°C, or from 10°C to 110°C, or from 20°C to 90°C. Preferably, reaction temperatures are from 20°C to 90°C or from 20°C to 70°C. When using on or more additional reactors, the additional reactor temperature will vary from 40°C to 200°C, with 50°C to 140°C preferred, and 60°C to 120°C more preferred. Ranges from any of the recited lower limits to any of the recited upper limits are contemplated by the inventors and within the scope of the present description. In copolymerization techniques that utilize one or more bis-CP catalysts with one or more mono-CP catalysts, a lower reaction temperature is preferred for reactions utilizing mono-CP catalyst when compared to the bis-CP catalyst.

Reaction pressure is determined by the details of the catalyst system. In general reactors, whether a single reactor or each of a series of reactors, operates at a reactor pressure of less than 2500 pounds per square inch (psi) (17.23 MPa), or less than 2200 psi (15.16 MPa) or less than 2000 psi (13.78 MPa). Preferably, reactor pressure is from atmospheric pressure to 2000 psi (13.78 MPa), or from 200 psi (1.38 MPa) to 2000 psi (13.78 MPa), or from 300 psi (2.07 MPa) to 1800 psi (12.40 MPa). Ranges from any of the recited lower limits to any of the recited upper limits are contemplated by the inventors and within the scope of the present description.

In the case of less stable catalysts, catalyst can also be fed to a second reactor when the selected process uses reactors in series. Optimal temperatures can be achieved, particularly for series operation with progressively increasing polymerization temperature, by using bis cyclopentadienyl catalyst systems containing hafnium as the transition metal, especially those having a covalent, single atom bridge coupling the two cyclopentadienyl rings.

Particular reactor configurations and processes suitable for use in the processes described herein are described in detail in U.S. Patent No. 6,319,998 and U.S. Provisional Patent Application having Serial No. 60/243,192, filed Oct. 25, 2000.

Branching is introduced by the choice of polymerization catalysts or process. The copolymerization process may occur with or without hydrogen present. However, operation without hydrogen is preferred because it inhibits branching in the copolymers since it lead to chain ends which are completely or substantially saturated. Without being limited by theory, it is believed that these saturated polymers cannot participate in the principal branching pathway where preformed polymers with unsaturated chain ends are reincorporated into new growing chains which lead to branched polymers.

In alternative embodiments, the first and second ethylene-based copolymers can be polymerized in an alkane solvent, either hexane in a solution process or propylene in a slurry process and finished to remove the solvent. The first and second ethylene-based copolymers can have a medium viscosity and a molecular weight in excess of that needed in the final lubricant formulation. For example, most of the traditional EPDM manufacturing plants cannot "finish" low viscosity polymers having the right viscosity for lubricant formulations. In another example, low viscosity copolymers tend to cold flow upon storage. The second example can be particularly true for amorphous copolymers, which have a lower plateau modulus. The bales are then processed by a series of steps to create the final lubricant composition.

In some embodiments, ethylene and a first comonomer can be polymerized in the presence of a first metallocene catalyst in a first polymerization reaction zone under first polymerization conditions to produce a first effluent comprising a first ethylene-based copolymer. Ethylene and a second comonomer can also be polymerized in the presence of a second metallocene catalyst in a second polymerization reaction zone under second polymerization conditions to produce a second effluent comprising a second ethylene-based copolymer. The resulting discrete copolymers can then be mixed or otherwise blended to provide the rheology modifier.

In one or more embodiments, the first and second polymerization conditions can be independently selected from the group consisting of slurry phase, solution phase and bulk phase. When the first and second polymerization conditions are solution phase, forming the polymeric composition can further include substantial removal of the solvent from the first effluent, the second effluent, or both to produce a solid polymeric composition.

In one or more embodiments, separate polymerizations can be performed in parallel with the effluent polymer solutions from two reactors combined downstream before the finishing. In another embodiment, separate polymerizations may be performed in series, where the effluent of one reactor is fed to the next reactor. In still another embodiment, the separate polymerization may be performed in the same reactor, preferably in sequential polymerizations.

The ethylene-based copolymers can be polymerized by a metallocene catalyst, to form the first ethylene-based copolymer in one reactor and the second ethylene-based copolymer in another reactor. The first and second ethylene-based copolymers can be combined and then subjected to finishing steps to produce the polymeric composition. The first ethylene-based copolymer can be made first; alternatively, the second ethylene-based copolymer can be made first in a series reactor configuration or both ethylene-based copolymers can be made simultaneously in a parallel reactor configuration.

The metallocene catalysts, and their use with non-coordinating ions and non-ionic activators used in the polymerization process can be as discussed and described in U.S. Provisional Patent Application having Serial No. 61/173,528, entitled "Ethylene-Based Copolymers and Lubricating Oil Compositions Containing the Same," bearing attorney docket number 2009EM079-PRV, filed on April 28, 2009.

Examples of suitable bis-cyclopentadienyl metallocenes, include, but are not limited to the type disclosed in U. S. Patent Nos. 5,324,800; 5,198,401; 5,278,119; 5,387,568; 5,120,867; 5,017,714; 4,871,705; 4,542,199; 4,752,597; 5,132,262; 5,391,629; 5,243,001; 5,278,264; 5,296,434; and 5,304,614.

## Lubrication Oil Composition

Lubricating oil compositions containing the polymeric composition and one or more base oils are also provided. The base oil can be or include natural or synthetic oils of lubricating viscosity, whether derived from hydrocracking, hydrogenation, other refining processes, unrefined processes, or re-refined processes. The base oil can be or include used oil. Natural oils include animal oils, vegetable oils, mineral oils and mixtures thereof. Synthetic oils include hydrocarbon oils, silicon-based oils, and liquid esters of phosphorus-containing acids. Synthetic oils may be produced by Fischer-Tropsch gas-to-liquid synthetic procedure as well as other gas-to-liquid oils.

In one embodiment, the base oil is or includes a polyalphaolefin (PAO) including a PAO-2, PAO-4, PAO-5, PAO-6, PAO-7 or PAO-8 (the numerical value relating to Kinematic Viscosity at 100°C). Preferably, the polyalphaolefin is prepared from dodecene and/or decene. Generally, the polyalphaolefin suitable as an oil of lubricating viscosity has a viscosity less than that of a PAO-20 or PAO-30 oil. In one or more embodiments, the base oil can be defined as specified in the American Petroleum Institute (API) Base Oil Interchangeability Guidelines. For example, the base oil can be or include an API Group I, II, III, IV, V oil or mixtures thereof.

In one or more embodiments, the base oil can include oil or blends thereof conventionally employed as crankcase lubricating oils. For example, suitable base oils can include crankcase lubricating oils for spark-ignited and compression-ignited internal combustion engines, such as automobile and truck engines, marine and railroad diesel engines, and the like. Suitable base oils can also include those oils conventionally employed in and/or adapted for use as power transmitting fluids such as automatic transmission fluids, tractor fluids, universal tractor fluids and hydraulic fluids, heavy duty hydraulic fluids, power steering fluids and the like. Suitable base oils can also be or include gear lubricants, industrial oils, pump oils and other lubricating oils.

In one or more embodiments, the base oil can include not only hydrocarbon oils derived from petroleum, but also include synthetic lubricating oils such as esters of dibasic acids; complex esters made by esterification of monobasic acids, polyglycols, dibasic acids and alcohols; polyolefin oils, etc. Thus, the lubricating oil compositions described can be suitably incorporated into synthetic base oils such as alkyl esters of dicarboxylic acids, polyglycols and alcohols; polyalpha-olefins; polybutenes; alkyl benzenes; organic esters of phosphoric acids; polysilicone oils; etc. The lubricating oil composition can also be utilized in a concentrate form, such as from 1 wt% to 49 wt% in oil, e.g., mineral lubricating oil, for ease of handling, and may be prepared in this form by carrying out the reaction of the invention in oil as previously described.

The lubrication oil composition can include a base oil and one or more compositionally disperse polymeric compositions and/or one or more crystallinity disperse polymeric compositions, and optionally, a pour point depressant. The lubrication oil composition can have a thickening efficiency greater than 1.5, or greater than 1.7, or greater than 1.9, or greater than 2.2, or greater than 2.4 or greater than 2.6. The lubrication oil composition can have a shear stability index less than 55, or less than 45, or less than 35, or less than 30, or less than 25, or less than 20, or less than 15. The lubrication oil composition can have a complex viscosity at -35°C of less than 500, or less than 450, or less than 300, or less than 100, or less than 50, or less 20, or less than 10 centistokes (cSt). The lubrication oil composition can have a Mini Rotary Viscometer (MRV) viscosity at -35°C in a 10W-50 formulation of less than 60,000 cps according to ASTM 1678. The lubrication oil composition can have any combination of desired properties. For example, the lubrication oil composition can have a thickening efficiencies greater than 1.5 or greater than 2.6, a shear stability index of less than 55 or less than 35 or less than 25, a complex viscosity at -35°C of less than 500 cSt or less than 300 cSt or less than 50 cSt, and/or a Mini Rotary Viscometer (MRV) viscosity at -35°C in a 10W-50 formulation of less than 60,000 cps according to ASTM 1678.

The lubrication oil composition preferably comprises 2.5 wt%, or 1.5 wt%, or 1.0 wt% or 0.5 wt% of the compositionally disperse and/or crystallinity disperse polymeric composition. In some embodiments, the amount of the polymeric composition in the lubrication oil composition can range from a low of 0.5 wt%, 1 wt%, or 2 wt% to a high of 2.5 wt%, 3 wt%, 5 wt%, or 10 wt%.

## Oil Additives

The lubricating oil composition can optionally contain one or more conventional additives, such as, for example, pour point depressants, antiwear agents, antioxidants, other viscosity-index improvers, dispersants, corrosion inhibitors, anti-foaming agents, detergents, rust inhibitors, friction modifiers, and the like.

Corrosion inhibitors, also known as anti-corrosive agents, reduce the degradation of the metallic parts contacted by the lubricating oil composition. Illustrative corrosion inhibitors include phosphosulfurized hydrocarbons and the products obtained by reaction of a phosphosulfurized hydrocarbon with an alkaline earth metal oxide or hydroxide, preferably in the presence of an alkylated phenol or of an alkylphenol thioester, and also preferably in the presence of carbon dioxide. Phosphosulfurized hydrocarbons are prepared by reacting a suitable hydrocarbon such as a terpene, a heavy petroleum fraction of a $C_2$ to $C_6$ olefin polymer such as polyisobutylene, with from 5 to 30 wt% of a sulfide of phosphorus for 1/2 to 15 hours, at a temperature in the range of 66°C to 316°C. Neutralization of the phosphosulfurized hydrocarbon may be effected in the manner known by those skilled in the art.

Oxidation inhibitors, or antioxidants, reduce the tendency of mineral oils to deteriorate in service, as evidenced by the products of oxidation such as sludge and varnish-like deposits on the metal surfaces, and by viscosity growth. Such oxidation inhibitors include alkaline earth metal salts of alkylphenolthioesters having $C_5$ to $C_{12}$ alkyl side chains, e.g., calcium nonylphenate sulfide, barium octylphenate sulfide, dioctylphenylamine, phenylalphanaphthylamine, phosphosulfurized or sulfurized hydrocarbons, etc. Other oxidation inhibitors or antioxidants useful in this invention include oil-soluble copper compounds, such as described in U.S. Patent No. 5,068,047.

Friction modifiers serve to impart the proper friction characteristics to lubricating oil compositions such as automatic transmission fluids. Representative examples of suitable friction modifiers are found in U.S. Patent No. 3,933,659, which discloses fatty acid esters and amides; U.S. Patent No. 4,176,074, which describes molybdenum complexes of polyisobutenyl succinic anhydride-amino alkanols; U.S. Patent No. 4,105,571, which discloses glycerol esters of dimerized fatty acids; U.S. Patent No. 3,779,928, which discloses alkane phosphonic acid salts; U.S. Patent No. 3,778,375, which discloses reaction products of a phosphonate with an oleamide; U.S. Patent No. 3,852,205, which discloses S-carboxyalkylene hydrocarbyl succinimide, S-carboxyalkylene hydrocarbyl succinamic acid and mixtures thereof; U.S. Patent No. 3,879,306, which discloses N(hydroxyalkyl)alkenyl-succinamic acids or succinimides; U.S. Patent No. 3,932,290, which discloses reaction products of di-(lower alkyl) phosphites and epoxides; and U.S. Patent No. 4,028,258, which discloses the alkylene oxide adduct of phosphosulfurized N-(hydroxyalkyl) alkenyl succinimides. Preferred friction modifiers are succinate esters, or metal salts thereof, of hydrocarbyl substituted succinic acids or anhydrides and thiobis-alkanols such as described in U.S. Patent No. 4,344,853.

Dispersants maintain oil insolubles, resulting from oxidation during use, in suspension in the fluid, thus preventing sludge flocculation and precipitation or deposition on metal parts. Suitable dispersants include high molecular weight N-substituted alkenyl succinimides, the reaction product of oil-soluble polyisobutylene succinic anhydride with ethylene amines such as tetraethylene pentamine and borated salts thereof. High molecular weight esters (resulting from the esterification of olefin substituted succinic acids with mono or polyhydric aliphatic alcohols) or Mannich bases from high molecular weight alkylated phenols (resulting from the condensation of a high molecular weight alkylsubstituted phenol, an alkylene polyamine and an aldehyde such as formaldehyde) are also useful as dispersants.

Pour point depressants ("ppd"), otherwise known as lube oil flow improvers, lower the temperature at which the fluid will flow or can be poured. Any suitable pour point depressant known in the art can be used. For example, suitable pour point depressants include, but are not limited to, one or more $C_8$ to $C_{18}$ dialkylfumarate vinyl acetate copolymers, polymethyl methacrylates, alkylmethacrylates and wax naphthalene.

Foam control can be provided by any one or more anti-foamants. Suitable anti-foamants include polysiloxanes, such as silicone oils and polydimethyl siloxane.

Anti-wear agents reduce wear of metal parts. Representatives of conventional antiwear agents are zinc dialkyldithiophosphate and zinc diaryldithiosphate, which also serves as an antioxidant.

Detergents and metal rust inhibitors include the metal salts of sulphonic acids, alkyl phenols, sulfurized alkyl phenols, alkyl salicylates, naphthenates and other oil soluble mono- and dicarboxylic acids. Highly basic (viz, overbased) metal sales, such as highly basic alkaline earth metal sulfonates (especially Ca and Mg salts) are frequently used as detergents.

Compositions when containing these conventional additives are typically blended into the base oil in amounts which are effective to provide their normal attendant function. Thus, typical formulations can include, in amounts by weight, a VI improver (0.01-12%); a corrosion inhibitor (0.01-5%); an oxidation inhibitor (0.01-5%); depressant (0.01-5%); an anti-foaming agent (0.001-3%); an anti-wear agent (0.001-5%); a friction modifier (0.01-5%); a detergent/rust inhibitor (0.01-10%); and a base oil.

When other additives are used, it may be desirable, although not necessary, to prepare additive concentrates comprising concentrated solutions or dispersions of the viscosity index improver (in concentrate amounts hereinabove described), together with one or more of the other additives, such a concentrate denoted an "additive package," whereby several additives can be added simultaneously to the base oil to form a lubricating oil composition. Dissolution of the additive concentrate into the lubricating oil may be facilitated by solvents and by mixing accompanied with mild heating, but this is not essential. The additive-package will typically be formulated to contain the viscosity index improver and optional additional additives in proper amounts to provide the desired concentration in the final formulation when the additive-package is combined with a predetermined amount of base lubricant. Thus, the products of the present invention can be added to small amounts of base oil or other compatible solvents along with other desirable additives to form additive-packages containing active ingredients in collective amounts of typically from 2.5 to 90%, preferably from 5 to 75%, and still more preferably from 8 to 50% by weight additives in the appropriate proportions with the remainder being base oil. The final formulations may use typically 10 wt% of the additive-package with the remainder being base oil.

Compositions when containing these conventional additives can be blended with the base oil in amounts which are effective to provide their normal attendant function. Thus, typical formulations can include, in amounts by weight, a VI improver (from 0.01% to 12%); a corrosion inhibitor (from 0.01% to 5%); an oxidation inhibitor (from 0.01% to 5%); depressant (of from 0.01% to 5%); an anti-foaming agent (from 0.001% to 3%); an anti-wear agent (from 0.001% to 5%); a friction modifier (from 0.01% to 5%); a detergent/rust inhibitor (from 0.01 to 10%); and a base oil.

When other additives are used, it may be desirable, although not necessary, to prepare additive concentrates that include concentrated solutions or dispersions of the VI improver (in concentrated amounts), together with one or more of the other additives, such a concentrate denoted an "additive package," whereby several additives can be added simultaneously to the base oil to form a lubrication oil composition. Dissolution of the additive concentrate into the lubrication oil can be facilitated by solvents and by mixing accompanied with mild heating, but this is not essential. The additive-package can be formulated to contain the VI improver and optional additional additives in proper amounts to provide the desired concentration in the final formulation when the additive-package is combined with a predetermined amount of base oil.

## Blending With Base Oils

Conventional blending methods are described in U.S. Patent No. 4,464,493. This conventional process requires passing the polymer through an extruder at elevated temperature for degradation of the polymer and circulating hot oil across the die face of the extruder while reducing the degraded polymer to particle size upon issuance from the extruder and into the hot oil. The pelletized, solid polymer compositions of the present invention, as described above, can be added by blending directly with the base oil so as give directly viscosity for the VI improver, so that the complex multi-step process of the prior art is not needed. The solid polymer composition can be dissolved in the base oil without the need for additional shearing and degradation processes.

The polymer compositions will be soluble at room temperature in lube oils at up to 10 percent concentration in order to prepare a viscosity modifier concentrate. Such concentrate, including eventually an additional additive package including the typical additives used in lube oil application as described above, is generally further diluted to the final concentration (usually around 1%) by multi-grade lube oil producers. In this case, the concentrate will be a pourable homogeneous solid free solution.

The polymer compositions preferably have a SSI (determined according to ASTM D97) of from 10 to 50.

## Specific Embodiments

A preferred polymeric composition includes at least 33 wt% of a first ethylene-based copolymer based on the total weight of the polymeric composition, and preferably 67 wt% or less of a second ethylene-based copolymer based on the total weight of the polymeric composition. In some embodiments, the polymeric composition comprises 40 wt% of the first ethylene-based copolymer based on the weight of the polymeric composition and 60 wt% of the second ethylene-based copolymer based on the weight of the polymeric composition. In some embodiments, the amount of the first ethylene-based copolymer in the polymeric composition can be 35 wt%, 45 wt%, 50 wt%, 55 wt%, 60 wt%, 65 wt%, 70 wt%, 75 wt%, 80 wt%, 85 wt%, or 90 wt%, based on the combined weight of the first ethylene-based copolymer and the second ethylene-based copolymer. In some embodiments, the amount of the second ethylene-based copolymer in the polymeric composition can be 10 wt%, 15 wt%, 20 wt%, 25 wt%, 30 wt%, 35 wt%, 40 wt%, 50 wt%, or 55 wt%, based on the combined weight of the first ethylene-based copolymer and the second ethylene-based copolymer. In some embodiments, the weight percent of the first ethylene-based copolymer in the polymeric composition is greater than the weight percent of the second ethylene-based copolymer in the polymeric composition.

In embodiments where the first and second ethylene-based copolymers are copolymers of ethylene and propylene, the first and second ethylene-based copolymers can be separated by no less than 22 wt% and preferably no less than 19 wt% ethylene content, based on the combined weight of the first and second ethylene-based copolymers. The less crystalline ethylene-based copolymer can have an ethylene content of less than 55 wt%, less than 54 wt%, less than 53 wt%, or less than 52 wt%, based on the weight of the less crystalline ethylene-based copolymer. The first and second ethylene-based copolymers can form viscosity modifiers that do not show an adverse effect (or show a reduced adverse effect as compared to viscosity modifiers without the first and second ethylene-based copolymers) on the viscosity due to lowering the temperature from ambient to -35°C in solution either in synthetic or petroleum base oils.

While not wishing to be bound by theory, it is believed that the rheology modifiers that are compositionally disperse and/or crystallinity disperse are less prone to the deleterious effects of macroscopic crystallization in a dilute solution, as measured by the change in the rheology of the fluid solution, compared to an equivalent amount of single ethylene-based copolymers of the same average composition as the compositionally disperse blend. It is also believed that these compositionally and/or crystallinity disperse polymers will have lower crystallization on cooling from ambient to sub-ambient temperatures, resulting in better low temperature flow properties in solution as compared to equivalent compositionally uniform polymers of similar molecular weight and TE. These polymeric compositions and their use in lubrication oil compositions with bases oils can be distinguished from other compositionally monodisperse olefin copolymers by physical separation of the compositionally disperse polymer into components as well as by a higher ratio of the melting point by DSC to the heat of fusion than would be observed for a monodisperse polymer of the same average ethylene content, melt viscosity and composition.

## Polymer Analyses

The ethylene content as an ethylene weight percent ($C_2$ wt%) for the ethylene-based copolymers were determined according to ASTM D1903.

DSC Measurements of the crystallization temperature, $T_c$, and melting temperature, $T_m$, of the ethylene-based copolymers were measured using a TA Instruments Model 2910 DSC. Typically, 6-10 mg of a polymer was sealed in a pan with a hermetic lid and loaded into the instrument. In a nitrogen environment, the sample was first cooled to -100°C at 20°C/min. It was then heated to 220°C at 10°C/min and melting data (first heat) were acquired. This provides information on the melting behavior under as-received conditions, which can be influenced by thermal history as well as sample preparation method. The sample was then equilibrated at 220°C to erase its thermal history. Crystallization data (first cool) were acquired by cooling the sample from the melt to -100°C at 10°C/min and equilibrated at -100°C. Finally the sample was heated again to 220°C at 10°C/min to acquire additional melting data (second heat). The endothermic melting transition (first and second heat) and exothermic crystallization transition (first cool) were analyzed for peak temperature and area under the peak. The term "melting point," as used herein, is the highest peak among principal and secondary melting peaks as determined by DSC during the second melt, discussed above. The thermal output was recorded as the area under the melting peak of the sample, which was typically at a maximum peak at 30°C to 175°C and occurred between the temperatures of 0°C and 200°C. The thermal output was measured in Joules as a measure of the heat of fusion. The melting point is recorded as the temperature of the greatest heat absorption within the range of melting of the sample.

Molecular weight (weight-average molecular weight, Mw, number-average molecular weight, Mn, and molecular weight distribution, Mw/Mn or MWD) were determined using a High Temperature Size Exclusion Chromatograph (either from Waters Corporation or Polymer Laboratories), equipped with a differential refractive index detector (DRI), an online light scattering (LS) detector, and a viscometer. Experimental details not described below, including how the detectors were calibrated, are described in: T. Sun, P. Brant, R. R. Chance, and W. W. Graessley, MACROMOLECULES, Vol. 34, Number 19, pp. 6812-6820 (2001).

Three Polymer Laboratories PLgel 10mm Mixed-B columns were used. The nominal flow rate was 0.5 cm$^3$/min, and the nominal injection volume was 300 $\mu$L. The various transfer lines, columns and differential refractometer (the DRI detector) were contained in an oven maintained at 145°C. Solvent for the SEC experiment was prepared by dissolving 6 grams of butylated hydroxy toluene as an antioxidant in 4 liters of Aldrich reagent grade 1, 2, 4 trichlorobenzene (TCB). The TCB mixture was then filtered through a 0.7 $\mu$m glass pre-filter and subsequently through a 0.1 $\mu$m Teflon filter. The TCB was then degassed with an online degasser before entering the SEC. Polymer solutions were prepared by placing dry polymer in a glass container, adding the desired amount of TCB, then heating the mixture at 160°C with continuous agitation for 2 hours. All quantities were measured gravimetrically. The TCB densities used to express the polymer concentration in mass/volume units are 1.463 g/ml at room temperature and 1.324 g/ml at 145°C. The injection concentration ranged from 1.0 mg/ml to 2.0 mg/ml, with lower concentrations being used for higher molecular weight samples. Prior to running each sample the DRI detector and the injector were purged. Flow rate in the apparatus was then increased to 0.5 ml/minute, and the DRI was allowed to stabilize for 8 to 9 hours before injecting the first sample. The LS laser was turned on from 1 hour to 1.5 hours before running samples.

The concentration, c, at each point in the chromatogram is calculated from the baseline-subtracted DRI signal, I$_{DRI}$, using the following equation:

$$c = K_{DRI}I_{DRI}/(dn/dc)$$

where K$_{DRI}$ is a constant determined by calibrating the DRI, and (dn/dc) is the same as described below for the light scattering (LS) analysis. Units on parameters throughout this description of the SEC method are such that concentration is expressed in g/cm$^3$, molecular weight is expressed in g/mole, and intrinsic viscosity is expressed in dL/g.

The light scattering detector used was a Wyatt Technology High Temperature mini-DAWN. The polymer molecular weight, M, at each point in the chromatogram is determined by analyzing the LS output using the Zimm model for static light scattering (M.B. Huglin, LIGHT SCATTERING FROM POLYMER SOLUTIONS, Academic Press, 1971):

$$\frac{K_o c}{\Delta R(\theta)} = \frac{1}{MP(\theta)} + 2A_2 c$$

Here, $\Delta R(\theta)$ is the measured excess Rayleigh scattering intensity at scattering angle $\theta$, c is the polymer concentration determined from the DRI analysis, A$_2$ is the second virial coefficient [for purposes of this invention and the claims thereto, A$_2$ = 0.0006 for propylene polymers and 0.001 otherwise], P($\theta$) is the form factor for a monodisperse random coil (M.B. Huglin, LIGHT SCATTERING FROM POLYMER SOLUTIONS, Academic Press, 1971), and K$_o$ is the optical constant for the system:

$$K_o = \frac{4\pi^2 n^2 (dn/dc)^2}{\lambda^4 N_A}$$

in which N$_A$ is Avogadro's number, and (dn/dc) is the refractive index increment for the system. The refractive index, n = 1.500 for TCB at 145°C and $\lambda$ = 690 nm. For purposes of this invention and the claims thereto (dn/dc) = 0.104 for propylene polymers and 0.1 otherwise.

A high temperature Viscotek Corporation viscometer, which has four capillaries arranged in a Wheatstone bridge configuration with two pressure transducers, was used to determine specific viscosity. One transducer measures the total pressure drop across the detector, and the other, positioned between the two sides of the bridge, measures a differential pressure. The specific viscosity, $\eta_s$, for the solution flowing through the viscometer is calculated from their outputs. The intrinsic viscosity, [$\eta$], at each point in the chromatogram is calculated from the following equation:

$$\eta_s = c[\eta] + 0.3(c[\eta])^2$$

where c is concentration and was determined from the DRI output.

The branching index (g') is calculated using the output of the SEC-DRI-LS-VIS method as follows. The average intrinsic viscosity, $[\eta]_{avg}$, of the sample is calculated by:

$$[\eta]_{avg} = \frac{\sum c_i[\eta]_i}{\sum c_i}$$

where the summations are over the chromatographic slices, i, between the integration limits.

The branching index g' is defined as:

$$g' = \frac{[\eta]_{avg}}{kM_v^{\alpha}}$$

where, for purpose of this invention and claims thereto, $\alpha$ = 0.695 for ethylene, propylene, and butene polymers; and k = 0.000579 for ethylene polymers, k = 0.000228 for propylene polymers, and k = 0.000181 for butene polymers. $M_v$ is the viscosity-average molecular weight based on molecular weights determined by LS analysis.

Anton-Parr Low Temperature Solution Rheology (low temperature rheology) experiments were done on an Anton-Parr Model MCR501 rheometer using a 1" cone and plate setup. The cone has a nominal 1 degree angle and 50 micron gap. About 100 microliters of sample is deposited on the bottom plate using a syringe-pipette. The cone is then lowered onto the plate so that the volume between the cone and plate is fully occupied by solution. The temperature is then lowered at a cooling rate of 1.5°C/min. while measuring the complex viscosity at an angular frequency of 0.1 radians/sec. applying a 10% strain and recording a value every minute. The viscosity at 0.1 rad/sec is then plotted as a function of temperature to observe the effect of gelation.

**Scanning Brookfield Viscometer**

The Scanning Brookfield Viscometer was operated according to ASTM D5133. 25 ml to 30 ml of the sample was poured into a glass stator to the fill line which was immersed into an oil bath. The oil bath was programmed to cool from -5°C to -40°C at 1°C/hour scanning speed. The sample was preheated to 90°C for 90 minutes to remove thermal history. The temperature ramping program was set to cool from -5°C to -40°C at 1°C/hour scanning speed. In sample collection mode, the Gelation Index (GI) and maximum viscosity can be viewed. The torque versus temperature data set can be converted to a viscosity-temperature plot at which a gelation point and/or corresponding gelation index can be established.

Melt Index (MI) was measured according to ASTM D1238 at 190°C under a 2.16 kilogram load.

Melt Flow Rate (MFR) was measured according to ASTM D1238 at 230°C under a 2.16 kilogram load or a 21.6 kilogram load.

Thickening Efficiency (TE) was determined according to ASTM D445.

Shear Stability index (SSI) was determined according to ASTM D6278 at 30 and 90 passes using a Kurt Ohban machine.

Shear stress data was accomplished by first heating the sample to -15°C, and waiting for 15 minutes. Then while measuring the shear stress, applying a logarithmically increasing strain by varying the shear rate logarithmically from $10^{-3}$ to 10 with 20 points/decade and 1 second per point.

The number of branch points was determined by measuring the radius of gyration of polymers as a function of the molecular weight by the methods of size exclusion chromatography augmented by laser light scattering. These procedures are described in the publications "A Study of the Separation Principle in Size Exclusion Chromatography" by T. Sun, R. R. Chance, W. W. Graessley and D. J. Lohse in the journal MACROMOLECULES, 2004, Vol. 37, Issue 11, pp. 4304-4312, and "Effect of Short Chain Branching on the Coil Dimensions of Polyolefins in Dilute Solution" by T. Sun, R. R. Chance, W. W. Graessley and P. Brant in the journal MACROMOLECULES, 2001, Vol. 34, Issue 19, pp. 6812-6820.

Branching in polymers having narrow, and most probably, low polydispersity index with essentially uniform intramolecular and intermolecular distribution of composition can also be described by the ratio of the TE to the MFR@230°C measured at a load of 2.16Kg. High values of this parameter indicate low levels of branching while low levels indicate substantial levels of branching.

Intermolecular composition distribution, unlike CDBI, contemplates weight percent of copolymer content within a smaller range from a median total molar comonomer content, e.g., within 25 wt% of median. For example, for a Gaussian compositional distribution, 95.5% of the polymer, used herein for this example as "Polymer Fraction", is within 20 wt% ethylene of the mean if the standard deviation is 10%. The intermolecular composition distribution for the Polymer Fraction is 20 wt% ethylene for such a sample, *i.e.*, 10% standard deviation yields 20 wt% intermolecular composition distribution.

Compositional Heterogeneity, both intermolecular-CD and intramolecular-CD can be determined by carbon-13 NMR. Conventional techniques for measuring intermolecular-CD and intramolecular-CD are described in MACROMOLECULES, H. N. Cheng, Masahiro Kakugo, entitled "Carbon-13 NMR analysis of compositional heterogeneity in ethylene-propylene copolymers," Vol. 24, Issue 8, pp. 1724-1726, (1991), and in the publication MACROMOLECULES, C. Cozewith, entitled "Interpretation of carbon-13 NMR sequence distribution for ethylene-propylene copolymers made with heterogeneous catalysts," Vol. 20, Issue 6, pp. 1237-1244 (1987).

Generally, conventional carbon-13 NMR measurements of diad and triad distribution is used to characterize the ethylene-based copolymer. Any conventional technique for measuring carbon-13 NMR may be utilized. For example, ethylene-based copolymer samples are dissolved in a solvent, *e.g.*, trichlorobenzene at 4.5 wt% concentration. The carbon-13 NMR spectra are obtained at elevated temperature, *e.g.*, 140°C, on a NMR spectrometer at 100 MHz. An exemplary spectrometer is a pulsed Fourier transform Varian XL-400 NMR spectrometer. Deuteriated o-dichlorobenezene is placed in a coaxial tube to maintain an internal lock signal. The following instrument conditions are utilized: pulse angle, 75°; pulse delay, 25 second; acquisition time, 0.5 second, sweep width, 16000 Hz. The carbon-13 NMR peak area measurements were determined by spectral integration. Diad and triad concentrations were calculated from the equations presented in MACROMOLECULES, Kakugo et al., Vol. 15, Issue 4, pp. 1150-1152 (1982). The diad and triad concentrations were then normalized to give a mole fraction distribution. Polymer composition was calculated from the methane peaks, the methylene peaks, and the diad balance. These values may be considered individually or an average of the three values may be utilized. Unless stated otherwise, this application utilizes an average of these three values. The results are then compared to conventional model equations as disclosed in the above references.

One aspect of these measurements involves the determination of the reactivity ratios ($r_1 r_2$) of the polymerization system for the ethylene-based polymers according to the procedures in the publication. Polymers which have a compositional heterogeneity, either intramolecular or intermolecular, have a much larger reactivity ratio than the polymers which have only a small or negligible amount.

Without being limited to theory or one method of calculation, it is believed that an one exemplary model for, so called ideal copolymerizations, is described by the terminal copolymerization model:

$$m = M(r_1 M + 1)/(r_2 + M) \qquad (1)$$

wherein $r_1$ and $r_2$ are the reactivity ratios, $m$ is the ratio of monomers in the copolymer, $m_1/m_2$, $M$ is the ratio of monomers in the reactor, $M_1/M_2$, and the diad and triad concentrations follow first order Markov statistics. For this model, nine equations are derived that related to the diad and triad concentrations $P_{12}$ and $P_{21}$, the probability of propylene adding to an ethylene-ended chain, and the probability of propylene adding to a propylene-ended chain, respectively. Thus a fit of carbon-13 NMR data to these equations yields $P_{12}$ and $P_{21}$ as the model parameters from which $r_1$ and $r_2$ can be obtained from the relationships:

$$r_1 M = (1 - P_{12})/P_{12}$$

$$r_2/M = (1 - P_{21})/P_{21}$$

The corresponding equations for random copolymerizations with $r_1 r_2 = 1$ can also be used to simplify equation (1), above, to $m = r_1 M$. The ethylene fraction in the polymer, E, is equal to $1-P_{12}$. This allows the diad and triad equations to be written in terms of polymer composition:

$$EE = E^2$$

$$EE = 2E(1 - E)$$

$$PP = (1 - E)^2$$

$$EEE = E^3$$

$$EEP = 2E^2(1 - E)$$

$$EPE = E^2(1 - E)$$

$$PEP = E(1 - E)^2$$

$$PPE = 2E(1 - E)^2$$

$$PPP = (1 - E)^3$$

Variations and extensions of these equations are provided in the references mentioned herein, including use of catalysts with different active sites, equations for estimating the number of catalyst species present, or complex models such as those with three or more species present, etc.

From these modeling equations, and those equations presented by MACROMOLECULES, C. Cozewith, Ver Strate, Vol. 4, pp. 482-489 (1971), the average values of $\overline{r}_1$, $\overline{r}_2$, and $\overline{r_1 r_2}$ arising from the copolymerization kinetics are given by:

$$\overline{r}_1 = (\Sigma r_{1i} f_i / G_i) / (\Sigma f_i / G_i)$$

$$\overline{r}_2 = (\Sigma r_{2i} f_i / G_i) / (\Sigma f_i / G_i)$$

$$\overline{r_1 r_2} = (\Sigma r_{1i} f_i / G_i)\,(\Sigma r_{2i} f_i / G_i) / (\Sigma f_i / G_i)^2$$

where

$$G_i = r_{1i} M \pm 2 + \underline{r_{2i}} / M$$

These equations and the models presented in the references cited above may be utilized by those skilled in the art to characterize the ethylene-based copolymer composition distribution.

Further information and techniques for measuring intramolecular-CD are found in MACROMOLECULES, Randel, James C., Vol. 11, Issue 1, pp. 33-36 (1978), MACROMOLECULES, Cheng, H.N., Vol. 17, Issue 10, pp. 1950-1955 (1984), and MACROMOLECULES, Ray, G. Joseph, Johnson, Paul E., and Knox, Jack R., Vol. 10, Issue 4, pp. 773-778 (1977). Such techniques are readily known to those skilled in the art of analyzing and characterizing olefin polymers.

Temperature Rising Elution Fractionation (TREF). The determination of intermolecular compositional heterogeneity was determined by the fractionation of the EP copolymer carried out by a Polymer Char TREF 200 based on a well-known principle that the solubility of a semi-crystalline copolymer is a strong function of temperature. A corresponding method is described in U.S. Patent No. 5,008,204. The instrument is a column packed with solid stainless-steel beads. The copolymer of interest was dissolved in 1,2 ortho-dichlorobenzene (oDCB) at 160°C for 60 min. Half of a milliliter (ml) of the polymer solution (concentration = 4-5 mg/ml) was injected in the column and it was stabilized there at 140°C for 45 min. The solution was cooled from 140°C to -15°C at 1°C/min and equilibrated at this temperature for 10 min. This caused the copolymer to crystallize out of the quiescent solution in successive layers of decreasing crystallinity onto the surface of the beads. Pure solvent (oDCB) was pumped for 5 min at -15°C at a flow rate of 1 ml/min through an infrared detector. A valve was then switched to allow this chilled oDCB to flow through the column at the same flow rate at -15°C for 10 min. The material eluted was designated as the soluble fraction of the copolymer. At this point, the heater was on and the solvent continued to flow through both the column and the infrared detector while the temperature was programmed upward at a controlled rate of 2°C/min to 140°C. The infrared detector continuously measured the concentration of the copolymer in the effluent from the column, and a continuous solubility distribution curve was obtained.

In a specific embodiments, the first ethylene-based copolymer can be present in the polymeric composition in an amount of at least 33 wt%, based on the combined weight of the first and second ethylene-based copolymers, can have a crystallinity of less than 15 J/g or more preferably less than 10 J/g, and can have a composition with an ethylene content of less than 55 wt%, or less than 54 wt%, or less than 53 wt%, or less than 52 wt%, or less than 51 wt%, based on the weight of the first ethylene-based copolymer.

Described below are further embodiments of the inventions provided herein:

A. A polymeric composition, comprising:

a first ethylene-based copolymer comprising ethylene and at least one $C_3$ to $C_{20}$ alpha-olefin comonomer, said first ethylene-based copolymer having a weight percent of ethylene-derived units based on the weight of the first ethylene-based copolymer ($E_A$) ranging from 35 wt% to 52 wt% and a weight-average molecular weight ($Mw_A$) of less than or equal to 120,000; and

a second ethylene-based copolymer comprising ethylene and at least one $C_3$ to $C_{20}$ alpha-olefin comonomer, said second ethylene-based copolymer having a weight percent of ethylene-derived units based on the weight of the second ethylene-based copolymer ($E_B$) ranging from 65 wt% to 85 wt% and a weight-average molecular weight ($Mw_B$) of from above 75,000 to less than 130,000.

B. The polymeric composition of embodiment A, wherein at least one of the first ethylene-based copolymer and the second ethylene-based copolymer has a substantially linear structure.

C. The polymeric composition of embodiments A or B, wherein the first ethylene-based copolymer is present in an amount of at least 33 wt%, based on the combined weight of the first and second ethylene-based copolymers.

D. The polymeric composition according to any one of embodiments A-C, wherein the first ethylene-based copolymer has a heat of fusion on a first melt of the first ethylene-based copolymer ($H_A$) of less than 10 J/g.

E. The polymeric composition according to any one of embodiments A-D, wherein the first ethylene-based copolymer has an ethylene content of less than 50 wt%, based on the weight of the first ethylene-based copolymer.

F. The polymeric composition according to any one of embodiments A-E, wherein at least one of the first ethylene-based copolymer and the second ethylene-based copolymer has a molecular weight distribution (MWD) of 2.4 or less.

G. The polymeric composition according to any one of embodiments A-F, wherein at least one of the molecular weight distribution (MWD) of the first ethylene-based copolymer and the molecular weight distribution (MWD) of the second ethylene-based copolymer is in the range from greater than or equal to 1.80 to less than or equal to 1.95.

H. The polymeric composition according to any one of embodiments A-G, wherein the weight percent of ethylene-derived units of the first ethylene-based copolymer ($E_A$) is less than the weight percent of ethylene-derived units of the second ethylene-based copolymer ($E_B$).

I. The polymeric composition according to any one of embodiments A-H, wherein a difference between the weight percent of ethylene-derived units of the second ethylene-based copolymer ($E_B$) and weight percent of ethylene-derived units of the first ethylene-based copolymer ($E_A$) is greater than or equal to 5.

J. The polymeric composition according to any one of embodiments A-I, wherein a ratio of a melt index of the first ethylene-based copolymer ($MI_A$) to a melt index of the second ethylene-based copolymer ($MI_B$) is less than or equal to 3.0.

K. The polymeric composition according to any one of embodiments A-J, wherein the weight percent of the first ethylene-based copolymer in the polymeric composition is less than the weight percent of the second ethylene-based copolymer in the polymeric composition, based on the combined weight of the first and second copolymers.

L. The polymeric composition according to any one of embodiments A-K, wherein the weight-average molecular weight of the first ethylene-based copolymer ($Mw_A$) ranges from 60,000 to less than 120,000.

M. (deleted)

N. The polymeric composition according to any one of embodiments A-M, wherein at least one of the first ethylene-based copolymer and the second ethylene-based copolymer comprise ethylene and a comonomer selected from the group consisting of propylene, butene, hexene, octene, and mixtures thereof.

O. The polymeric composition according to any one of embodiments A-N, wherein at least one of the first ethylene-based copolymer and the second ethylene-based copolymer comprise ethylene and a comonomer selected from the group consisting of propylene, butene, hexene, octene, and mixtures thereof, and wherein the comonomer of at least one of the first ethylene-based copolymer and the second ethylene-based copolymer further comprises a polyene monomer, and the polymeric composition further comprises up to 5 mol% polyene-derived units.

P. The polymeric composition according to any one of embodiments A-O, wherein a weight percent of the first ethylene-based copolymer is less than or equal to 66 wt% of the total weight of the first ethylene-based copolymer and the second ethylene-based copolymer.

Q. The polymeric composition according to any one of embodiments A-P, wherein ethylene-derived units in the total amount of the first ethylene-based copolymer and the second ethylene-based copolymer ranges from 70 mol% to 85 mol%.

R. The polymeric composition according to any one of embodiments A-Q, wherein a heat of fusion on a first melt of the first ethylene-based copolymer ($H_A$) is less than a heat of fusion on a first melt of the second ethylene-based copolymer ($H_B$).

S. The polymeric composition according to any one of embodiments A-R, wherein a heat of fusion on the first melt of the first ethylene-based copolymer ($H_A$) ranges from 0 J/g to 10 J/g.

T. A lubrication oil composition comprising a base oil; and the polymeric composition according to any one of embodiments A-S.

U. The lubrication oil composition of embodiment T having at least one of: a TE of greater than or equal to 1.5; a SSI of less than 55; a complex viscosity at -31°C of less than or equal to 500 cSt; and a Mini Rotary Viscometer (MRV) viscosity at -35°C in a 10 W-50 formulation of less than 60,000 cps according to ASTM 1678.

V. A polymeric composition, comprising:

a first ethylene-based copolymer comprising ethylene and at least one $C_3$ to $C_{20}$ alpha-olefin comonomer, said first ethylene-based copolymer having a heat of fusion on a first melt of the first ethylene-based copolymer ($H_A$) ranging from 0 J/g to 15 J/g and a weight-average molecular weight ($Mw_A$) of less than 120,000; and a second ethylene-based copolymer comprising ethylene and at least one $C_3$ to $C_{20}$ alpha-olefin comonomer, said second ethylene-based copolymer having a heat of fusion on a first melt of the second ethylene-based copolymer ($H_B$) ranging from 30 J/g to 60 J/g and a weight-average molecular weight ($Mw_B$) of from above 75,000 to less than 130,000.

W. The polymeric composition of embodiment V, wherein the heat of fusion on the first melt of the first ethylene-based copolymer ($H_A$) ranges from 0 J/g to 10 J/g.

X. The polymeric composition of embodiments V or W, wherein at least one of the first ethylene-based copolymer and the second ethylene-based copolymer has a substantially linear structure.

Y. The polymeric composition according to any one of embodiments V-X, wherein at least one of the first ethylene-based copolymer and the second ethylene-based copolymer has a molecular weight distribution (MWD) of 2.4 or less.

Z. The polymeric composition according to any one of embodiments V-Y, wherein at least one of the molecular weight distribution (MWD) of the first ethylene-based copolymer and the molecular weight distribution (MWD) of the second ethylene-based copolymer is in the range from greater than or equal to 1.80 to less than or equal to 1.95.

AA. The polymeric composition according to any one of embodiments V-Z, wherein a weight percent of the first ethylene-based copolymer is greater than the weight percent of the second ethylene-based copolymer.

BB. The polymeric composition according to any one of embodiments V-AA, wherein the weight-average molecular weight of the first ethylene-based copolymer ($Mw_A$) ranges from 60,000 to less than 120,000.

CC. (deleted).

DD. The polymeric composition according to any one of embodiments V-CC, wherein at least one of the first ethylene-based copolymer and the second ethylene-based copolymer comprise ethylene and a comonomer selected from the group consisting of propylene, butene, hexene, octene, and mixtures thereof.

EE. The polymeric composition according to any one of embodiments V-DD, wherein at least one of the first ethylene-based copolymer and the second ethylene-based copolymer comprise ethylene and a comonomer selected from the group consisting of propylene, butene, hexene, octene, and mixtures thereof, and wherein the comonomer of at least one of the first ethylene-based copolymer and the second ethylene-based copolymer further comprises a polyene monomer, and the polymeric composition further comprises up to 5 mol% polyene-derived units.

FF. The polymeric composition according to any one of embodiments V-EE, wherein a ratio of a melt index of the first ethylene-based copolymer ($MI_A$) to a melt index of the second ethylene-based copolymer ($MI_B$) is less than or equal to 3.0.

GG. The polymeric composition according to any one of embodiments V-FF, wherein a weight percent of the first ethylene-based copolymer is less than 66 wt% of the total weight of the first ethylene-based copolymer and the second ethylene-based copolymer.

HH. The polymeric composition according to any one of embodiments V-GG, wherein the first ethylene-based copolymer is present in an amount of at least 33 wt% based on the combined weight of the first ethylene-based copolymer and the second ethylene-based copolymer.

II. The polymeric composition according to any one of embodiments V-HH, wherein the first ethylene-based copolymer has an ethylene content of less than 55 wt% based on the total weight of the first ethylene-based copolymer.

JJ. The polymeric composition according to any one of embodiments V-II, wherein the first ethylene-based copolymer has an ethylene content of less than 53 wt% based on the total weight of the first ethylene-based copolymer.

KK. The polymeric composition according to any one of embodiments V-JJ, wherein ethylene-derived units in the total amount of the first ethylene-based copolymer and the second ethylene-based copolymer ranges from 70 mol% to 85 mol%.

LL. A lubrication oil composition comprising a base oil; and the polymeric composition according to any one of embodiments V-KK.

MM. The lubrication oil composition of embodiment LL having at least one of: a TE of greater than or equal to 1.5; a SSI of less than 55; a complex viscosity at -31°C of less than or equal to 500 cSt; and a Mini Rotary Viscometer (MRV) viscosity at -35°C in a 10 W-50 formulation of less than 60,000 cps according to ASTM 1678.

NN. A method for making a composition of any of embodiments A-MM comprising combining the first copolymer and the second copolymer recited therein, and forming the composition.

**Examples**

The foregoing discussion can be further described with reference to the following non-limiting examples.

Example 1

Preparation of the Ethylene Propylene Copolymer of Example 1

All polymer compositions in Example 1 were synthesized in one continuous stirred tank reactors. The polymerization was performed in solution, using hexane as a solvent. In the reactor, polymerization was performed at a temperature of 110°C to 115°C, an overall pressure of 20 bar and ethylene and propylene feed rates of 1.3 kg/hr and 2 kg/hr, respectively. As catalyst, N,N-dimethylanilinium tetrakis(pentafluorophenyl)boron was used to activate di(p-triethylsilylphenyl)methenyl[(cyclopentadienyl)(2,7-di-tert-butylfluorenyl)]hafnium dimethyl. In the process, hydrogen addition and temperature control were used to achieve the desired MFR. The catalyst, activated externally to the reactor, was added as needed in amounts effective to maintain the target polymerization temperature.

The copolymer solution emerging from the reactor was stopped from further polymerization by addition of water and then devolatilized using conventionally known devolatilization methods such as flashing or liquid phase separation, first by removing the bulk of the hexane to provide a concentrated solution, and then by stripping the remainder of the solvent in anhydrous conditions using a devolatilizer or a twin screw devolatilizing extruder so as to end up with a molten polymer composition containing less than 0.5 wt% of solvent and other volatiles. The molten polymer was cooled until solid.

Table 1 shows various properties of the ethylene-based copolymers of Example 1.

| Table 1 | | | | | | | | | | | |
|---|---|---|---|---|---|---|---|---|---|---|---|
| ID | $M_W$ (g/mol) | Mw/Mn | EPR Polymer Wt% C2 | MRF 2.16kg 230C | MFR 21.6kg 230C | 1st Melt Tm, °C | 1st Melt Hf, J/g | 2nd Cool Tc,°C | 2nd Cool He, J/g | 2nd Melt Tm, °C | 2nd Melt Hf, J/g |
| PR01 | 82000 | 1.84 | 63.6 | 9.2 | 175 | 3.2 | 26 | -2 | 29 | -2.5 | 27 |
| PR02 | 71000 | 1.85 | 70.5 | 13 | 238 | 24, 46 | 38 | 14 | 41 | 31 | 33 |
| PR03 | 97,000 | 1.95 | 74.4 | 15 | 280 | -13 | 21 | -16 | 21 | -14 | 17 |
| PR04 | 80,000 | 1.93 | 71.8 | 12 | 239 | 23, 44 | 41 | 13 | 43 | 27 | 41 |
| PR05 | 89,000 | 2.07 | 71.8 | 12 | 259 | -3 | 28 | -5.7 | 22 | -4.3 | 23 |
| PR06 | 99,000 | 2 | 71.9 | 15 | 277 | 21, 48 | 54 | 18,26 | 49 | 37 | 48 |

(continued)

| | | | | | | | | | | | | | |
|---|---|---|---|---|---|---|---|---|---|---|---|---|---|
| | **Table 1** |
| ID | $M_W$ (g/mol) | Mw/Mn | EPR Polymer Wt% C2 | MRF 2.16kg 230C | MFR 21.6kg 230C | 1st Melt Tm, °C | 1st Melt Hf, J/g | 2nd Cool Tc,°C | 2nd Cool He, J/g | 2nd Melt Tm, °C | 2nd Melt Hf, J/g |
| PR07 | 103,000 | 2.07 | 70.9 | 8 | 184 | -15 | 18 | -18 | 20 | -17 | 21 |
| PR08 | 110,000 | 2.04 | 68.2 | 7.9 | 159 | -9.4 | 21 | -13 | 23 | -11 | 25 |
| PR09 | 95,000 | 2.14 | 64.1 | 4.9 | 155 | | | | | | |
| PR10 | 109,000 | 1.91 | 60.6 | 12 | 377 | | | | | | |
| PR11 | 98,000 | 1.85 | 54 | 12 | 288 | | | | | | |
| PR12 | 108,000 | 1.98 | 51.5 | | | | | | | | |

Table 2 shows the blending of the PR polymers to form test additive polymers.

| Sample | PR01 | PR02 | PR03 | PR04 | PR05 | PR06 | PR07 | PR08 | PR09 | PR10 | PR11 | PR12 |
|---|---|---|---|---|---|---|---|---|---|---|---|---|
| | **Table 2** |
| 1* | | | 280 | 120 | | | | | | | | |
| 2* | | 120 | 280 | | | | | | | | | |
| 3* | | | 280 | | | 120 | | | | | | |
| 4* | 320 | | | 80 | | | | | | | | |
| 5* | 280 | | | 120 | | | | | | | | |
| 6* | 240 | | | 160 | | | | | | | | |
| 7* | 320 | 80 | | | | | | | | | | |
| 8* | 280 | 120 | | | | | | | | | | |
| 9* | 240 | 160 | | | | | | | | | | |
| 10* | 320 | | | | | 80 | | | | | | |
| 11* | 280 | | | | | 120 | | | | | | |
| 12* | 240 | | | | | 160 | | | | | | |
| 13* | | | | 120 | 280 | | | | | | | |
| 14* | | 120 | | | 280 | | | | | | | |
| 15* | | | | | 280 | 120 | | | | | | |
| 16* | | | | 120 | | | | 280 | | | | |
| 17* | | 120 | | | | | | 280 | | | | |
| 18* | | | | | | 120 | | 280 | | | | |
| 19* | | | | 80 | | | 320 | | | | | |
| 20* | | | | 120 | | | 280 | | | | | |
| | **Table 2 Cont.** |
| Sample | PR01 | PR02 | PR03 | PR04 | PR05 | PR06 | PR07 | PR08 | PR09 | PR10 | PR11 | PR12 |
| 21* | | | | 120 | | | 280 | | | | | |
| 22* | | 80 | | | | | 320 | | | | | |

(continued)

| Table 2 Cont. | | | | | | | | | | | | |
|---|---|---|---|---|---|---|---|---|---|---|---|---|
| Sample | PR01 | PR02 | PR03 | PR04 | PR05 | PR06 | PR07 | PR08 | PR09 | PR10 | PR11 | PR12 |
| 23* | | 120 | | | | | 280 | | | | | |
| 24* | | 160 | | | | | 240 | | | | | |
| 25* | | | | | | 80 | 320 | | | | | |
| 26* | | | | | | 120 | 280 | | | | | |
| 27* | | | | | | 160 | 240 | | | | | |
| 28* | | | | 120 | | | | | 280 | | | |
| 29* | | 120 | | | | | | | 280 | | | |
| 30* | | | | | | 120 | | | 280 | | | |
| 31* | | | | 120 | | | | | | 280 | | |
| 32* | | 120 | | | | | | | | 280 | | |
| 33* | | | | | | 120 | | | | 280 | | |
| 34* | | | | 120 | | | | | | | 280 | |
| 35* | | 120 | | | | | | | | | 280 | |
| 36* | | | | | | 120 | | | | | 280 | |
| 37 | | | | 120 | | | | | | | | 280 |
| 38 | | 120 | | | | | | | | | | 280 |
| 39 | | | | | | 120 | | | | | | 280 |
| 40 | | | | 80 | | | | | | | | 320 |
| 41 | | 80 | | | | | | | | | | 320 |
| 42 | | | | | | 80 | | | | | | 320 |
| 43* | | | | 80 | | | | | | 320 | | |
| 44* | | 80 | | | | | | | | 320 | | |
| 45* | | | | | | 80 | | | | 320 | | |
| 46 | | | | 160 | | | | | | | | 240 |
| 47 | | 160 | | | | | | | | | | 240 |
| 48 | | | | | | 160 | | | | | | 240 |
| 49* | | | | 160 | | | | | | 240 | | |
| 50* | | 160 | | | | | | | | 240 | | |
| 51* | | | | | | 160 | | | | 240 | | |
| 52* | | 200 | | | | | | | | 200 | | |
| 53* | | 200 | | | | | | | 200 | | | |
| 54* | | 200 | | | | | | | | | 200 | |
| 55 | | 200 | | | | | | | | | | 200 |
| 56* | | | | 200 | | | | | | 200 | | |
| 57* | | | | 200 | | | | | 200 | | | |
| 58* | | | | 200 | | | | | | | 200 | |
| 59 | | | | 200 | | | | | | | | 200 |

(continued)

| | Table 2 Cont. | | | | | | | | | | | |
|---|---|---|---|---|---|---|---|---|---|---|---|---|
| Sample | PR01 | PR02 | PR03 | PR04 | PR05 | PR06 | PR07 | PR08 | PR09 | PR10 | PR11 | PR12 |
| 60* | | | | | | 200 | | | | 200 | | |
| 61* | | | | | | 200 | | | 200 | | | |
| 62* | | | | | | 200 | | | | | 200 | |
| 63 | | | | | | 200 | | | | | | 200 |
| 63 | | | | | | 200 | | | | | | 200 |
| 64* | | | | 240 | | | | | 160 | | | |
| 65* | | | | 240 | | | | | | 160 | | |
| 66* | | | | 240 | | | | | | | 160 | |
| 67 | | | | 240 | | | | | | | | 160 |
| 68* | | 240 | | | | | | | 160 | | | |
| 69* | | 240 | | | | | | | | 160 | | |
| 70* | | 240 | | | | | | | | | 160 | |
| 71 | | 240 | | | | | | | | | | 160 |
| 72* | | | | | | 240 | | | 160 | | | |
| 73* | | | | | | 240 | | | | 160 | | |
| 74* | | | | | | 240 | | | | | 160 | |
| 75 | | | | | | 240 | | | | | | 160 |
| 76* | | | | 160 | | | | | | | 240 | |
| 77* | | 160 | | | | | | | | | 240 | |
| 78* | | | | | | 160 | | | | | 240 | |
| 79* | | | | 160 | | | | | 240 | | | |
| 80* | | 160 | | | | | | | 240 | | | |
| 81* | | | | | | 160 | | | 240 | | | |
| * Reference example | | | | | | | | | | | | |

Tables 3a-3e show 10W-50 formulation for lube oil additive polymers.

All formulations were done with 53 g of EHC 45 (a group 11 base oil with 4.6 CSt) and 31 g of EHC 60 (a group 11 base oil with 6.1 CSt), containing 1.4 g of EPR polymer, 14 g of Infineum D3426 as an additive package, 0.7 g of Infineum 9340 (400BN, a Mg sulfonate), 1 g of Infineum 9330 (300BN, calcium sulfonate), and 0.3 g of Infineum V387 as a pour point depressant.

| Table 3a | | | | | | | | |
|---|---|---|---|---|---|---|---|---|
| | P8900G* | P8900K* | 36* | 37 | 39 | 42 | 46 | 47 |
| KV 100 (cSt) | 19.69 | 19.16 | 17.56 | 18.64 | 18.63 | 18.38 | 18.92 | 18.3 |
| CCS @ -20°C (cP) | 3090 | 3150 | 3630 | 3550 | 3690 | 3460 | 3480 | 3390 |
| CCS @ -25°C (cP) | 6,440 | 6,580 | 7090 | 6910 | 7160 | 7020 | 6720 | 6680 |
| MRV @ -25°C (yield stress) | <35 | <35 | <35 | <35 | <35 | <35 | <35 | <35 |
| MRV @ -25°C vise. (cP) | 15,200 | 13,700 | 15,300 | 15,700 | 16,500 | 16,600 | 15,100 | 13,700 |

(continued)

| Table 3a | | | | | | | | |
|---|---|---|---|---|---|---|---|---|
| | P8900G* | P8900K* | 36* | 37 | 39 | 42 | 46 | 47 |
| MRV @ -30°C (yield stress) | <35 | <35 | <35 | <35 | <35 | <35 | <35 | <35 |
| MRV @ -30°C vise. (cP) | 53,800 | 30,100 | 43,000 | 44,300 | 56,700 | 51,300 | 40,300 | 36,700 |
| Pour Point (°C) | -40 | -41 | -39 | -41 | -41 | -39 | -39 | -41 |
| * Reference example | | | | | | | | |

| Table 3b | | | | | | | | |
|---|---|---|---|---|---|---|---|---|
| | 48 | 54* | 55 | 59 | 62* | 63 | 70* | 31* |
| KV 100 (cSt) | 19.08 | 18.5 | 19.49 | 19.49 | 18.39 | 19.63 | 19.74 | 20.06 |
| CCS @ -20°C (cP) | 3780 | 3460 | 3460 | 3460 | 3600 | 3770 | 3550 | 3170 |
| CCS @ -25°C (cP) | 7140 | 6880 | 6530 | 6830 | 7080 | NA | 6870 | NA |
| MRV @ -25°C (yield stress) | <35 | <35 | <35 | <35 | <35 | <35 | <35 | <35 |
| MRV @ -25°C vise. (cP) | 16,700 | 13,400 | 14,700 | 14,100 | 13,600 | 15,800 | 12,300 | 19,500 |
| MRV @ -30°C (yield stress) | <35 | <35 | <35 | <35 | <35 | <70 | <35 | >350 |
| MRV @ -30°C vise. (cP) | 44,100 | 36,000 | 39,300 | 38,000 | 36,100 | 43,700 | 33,300 | >400,000 |
| Pour Point (°C) | -37 | -37 | -39 | -38 | -40 | -40 | -40 | -32 |
| * Reference example | | | | | | | | |

| Table 3c | | | | | | | | |
|---|---|---|---|---|---|---|---|---|
| | 32* | 43* | 44* | 49* | 50* | 51* | 52* | 56* |
| KV 100 (cSt) | 20.21 | 20.57 | 20.31 | 19.89 | 20.23 | 19.64 | 19.9 | 20.46 |
| CCS @ -20°C (cP) | 3660 | 3750 | 3540 | 3400 | 3710 | 3880 | 3320 | 3370 |
| CCS @ -25°C (cP) | NA | NA | NA | NA | NA | NA | NA | NA |
| MRV @ -25°C (yield stress) | <35 | <35 | <35 | <35 | <35 | <105 | <35 | <35 |
| MRV @ -25°C vise. (cP) | 18,600 | 24,700 | 21,100 | 18,800 | 18,100 | 20,900 | 15,000 | 18,400 |

(continued)

| Table 3c | | | | | | | | |
|---|---|---|---|---|---|---|---|---|
| | 32* | 43* | 44* | 49* | 50* | 51* | 52* | 56* |
| MRV @ - 30°C (yield stress) | <210 | <35 | >350 | >315 | <210 | >350 | >350 | >350 |
| MRV @ - 30°C vise. (cP) | >400,000 | >400,000 | >400,000 | >400,000 | >400,000 | >400,000 | >400,000 | >400,000 |
| Pour Point (°C) | -37 | -35 | -31 | -32 | -36 | -38 | -32 | -32 |
| * Reference example | | | | | | | | |

| Table 3d | | | | | | | | |
|---|---|---|---|---|---|---|---|---|
| | 65* | 69* | 33* | 45* | 60* | 73* | 34* | 38 |
| KV 100 (cSt) | 19.92 | 19.77 | 19.95 | 20.05 | 19.73 | 19.68 | 17.9 | 18.88 |
| CCS @ -20°C (cP) | 3300 | 3280 | 3,450 | 3,640 | 3,480 | 3,480 | 3400 | 3430 |
| CCS @ -25°C (cP) | NA | NA | 7,160 | 7,260 | 6,990 | 6,920 | 6810 | 6940 |
| MRV @ -25°C (yield stress) | <35 | <35 | <35 | <35 | <35 | <35 | <35 | <35 |
| MRV @ -25°C vise. (cP) | 17,800 | 14,100 | 17,400 | 18,700 | 16,800 | 14,800 | 14,400 | 15,200 |
| MRV @ -30°C (yield stress) | >350 | <70 | >350 | >350 | <280 | <140 | <35 | <35 |
| MRV @ -30°C vise. (cP) | >400,000 | 119,000 | 400,000 | 400,000 | 296,000 | 114,000 | 38,100 | 40,200 |
| Pour Point (°C) | -32 | -38 | -33 | -33 | -33 | -33 | -34 | -35 |
| * Reference example | | | | | | | | |

| Table 3e | | | | | | |
|---|---|---|---|---|---|---|
| | 40 | 41 | 66* | 71 | 67 | 75 |
| KV 100 (cSt) | 18.25 | 19.02 | 18.74 | 18.98 | 19.35 | 19.42 |
| CCS @ -20°C (cP) | 3490 | 3500 | 3280 | 3290 | 3,370 | 3,490 |
| CCS @ -25°C (cP) | 6840 | 7050 | 6740 | 6800 | 6,640 | 6,990 |
| MRV @ -25°C (yield stress) | <35 | <35 | <35 | <35 | <35 | <35 |
| MRV @ -25°C vise. (cP) | 16,200 | 16,700 | 12,600 | 11,400 | 12,300 | 13,200 |
| MRV @ -30°C (yield stress) | <35 | <35 | <35 | <35 | <35 | <35 |
| MRV @ -30°C vise. (cP) | 40,700 | 44,700 | 33,200 | 30,700 | 35,600 | 41,100 |
| Pour Point (°C) | -36 | -35 | -39 | -41 | -36 | -34 |
| * Reference example | | | | | | |

KV 100Cst was determined according to ASTM D445-5. CCS at -20C (cP) was determined according to ASTM D5293-4. CCS at -25°C (cP) was determined according to ASTM D5293-5. MRV at -25°C was determined according to ASTM D4684-4. MRV at - 30°C (yield stress) was determined according to ASTM D4684-5. MRV at -30°C (viscosity) was determined according to ASTM D4684-5. Pour Point (°C) was determined according to ASTM D5949-31.

Certain embodiments and features have been described using a set of numerical upper limits and a set of numerical lower limits. It should be appreciated that ranges from any lower limit to any upper limit are contemplated unless otherwise indicated. Certain lower limits, upper limits and ranges appear in one or more claims below. All numerical values are "about" or "approximately" the indicated value, and take into account experimental error and variations that would be expected by a person having ordinary skill in the art. Various terms have been defined above. To the extent a term used in a claim is not defined above, it should be given the broadest definition persons in the pertinent art have given that term as reflected in at least one printed publication or issued patent.

**Claims**

1. A polymeric composition, comprising:

   a first ethylene-based copolymer comprising ethylene and at least one C3 to C20 alpha-olefin comonomer, said first ethylene-based copolymer having a weight percent of ethylene-derived units based on the weight of the first ethylene-based copolymer (EA) ranging from 35 wt% to 52 wt% and a weight-average molecular weight (MwA) of less than 120,000; and
   a second ethylene-based copolymer comprising ethylene and at least one C3 to C20 alpha-olefin comonomer, said second ethylene-based copolymer having a weight percent of ethylene-derived units based on the weight of the second ethylene-based copolymer (EB) ranging from 65 wt% to 85 wt% and a weight-average molecular weight (MwB) of from above 75,000 to less than 130,000.

2. The polymeric composition of claim 1, wherein at least one of the first ethylene-based copolymer and the second ethylene-based copolymer has a substantially linear structure, such that the first ethylene-based copolymer and/or the second ethylene-based copolymer is characterized as having less than 1 branch point pendant with a carbon chain larger than 19 carbon atoms per 200 carbon atoms along a backbone.

3. The polymeric composition of claims 1 or 2, wherein the first ethylene-based copolymer is present in an amount of at least 33 wt%, based on the combined weight of the first and second ethylene-based copolymers.

4. The polymeric composition according to any one of claims 1-3, wherein the first ethylene-based copolymer has a heat of fusion on a first melt of the first ethylene-based copolymer (HA) of less than 10 J/g.

5. The polymeric composition according to any one of claims 1-4, wherein at least one of the first ethylene-based copolymer and the second ethylene-based copolymer has a molecular weight distribution (MWD) of 2.4 or less.

6. The polymeric composition according to any one of claims 1-5, wherein the weight percent of ethylene-derived units of the first ethylene-based copolymer (EA) is less than the weight percent of ethylene-derived units of the second ethylene-based copolymer (EB).

7. The polymeric composition according to any one of claims 1-6, wherein a difference between the weight percent of ethylene-derived units of the second ethylene-based copolymer (EB) and weight percent of ethylene-derived units of the first ethylene-based copolymer (EA) is greater than or equal to 17.

8. The polymeric composition according to any one of claims 1-7, wherein the weight percent of the first ethylene-based copolymer in the polymeric composition is less than the weight percent of the second ethylene-based copolymer in the polymeric composition, based on the combined weight of the first and second copolymers.

9. The polymeric composition according to any one of claims 1-8, wherein the weight-average molecular weight of the first ethylene-based copolymer (MwA) ranges from 60,000 to less than 120,000.

10. The polymeric composition according to any one of claims 1-9, wherein a weight percent of the first ethylene-based copolymer is less than or equal to 66 wt% of the total weight of the first ethylene-based copolymer and the second ethylene-based copolymer.

11. The polymeric composition according to any one of claims 1-10, wherein ethylene-derived units in the total amount of the first ethylene-based copolymer and the second ethylene-based copolymer ranges from 70 mol% to 85 mol%.

12. A polymeric composition, comprising:

a first ethylene-based copolymer comprising ethylene and at least one C3 to C20 alpha-olefin comonomer, said first ethylene-based copolymer having a heat of fusion on a first melt of the first ethylene-based copolymer (HA) ranging from 0 J/g to 15 J/g and a weight-average molecular weight (MwA) of less than 120,000; and a second ethylene-based copolymer comprising ethylene and at least one C3 to C20 alpha-olefin comonomer, said second ethylene-based copolymer having a heat of fusion on a first melt of the second ethylene-based copolymer (HB) ranging from 30 J/g to 60 J/g and a weight-average molecular weight (MwB) of from above 75,000 to less than 130,000.

13. A lubrication oil composition comprising a base oil; and the polymeric composition according to any one of claims 1-12.

14. The lubrication oil composition of claim 13, having at least one of: a TE of greater than or equal to 1.5; a SSI of less than 55; a complex viscosity at -31°C of less than or equal to 500 cSt; and a Mini Rotary Viscometer (MRV) viscosity at -35°C in a 10 W-50 formulation of less than 60,000 cps according to ASTM 1678.

15. A method for making the composition of any of claims 1-12 comprising the steps of:

(a) combining (i) a first ethylene-based copolymer comprising ethylene and at least one C3 to C20 alpha-olefin comonomer, said first ethylene-based copolymer having a weight percent of ethylene-derived units based on the weight of the first ethylene-based copolymer (EA) ranging from 35 wt% to 52 wt% and a weight-average molecular weight (MwA) of less than 120,000 with (ii) a second ethylene-based copolymer comprising ethylene and at least one C3 to C20 alpha-olefin comonomer, said second ethylene-based copolymer having a weight percent of ethylene-derived units based on the weight of the second ethylene-based copolymer (EB) ranging from 65 wt% to 85 wt% and a weight-average molecular weight (MwB) of from above 75,000 to less than 130,000; and
(b) forming the composition.

**Patentansprüche**

1. Polymerzusammensetzung, umfassend:

ein erstes Copolymer auf Ethylenbasis, das Ethylen und mindestens ein $C_3$- bis $C_{20}$-$\alpha$-Olefin-Comonomer umfasst, wobei besagtes erstes Copolymer auf Ethylenbasis einen Gewichtsprozentanteil von aus Ethylen abgeleiteten Einheiten, bezogen auf das Gewicht des ersten Copolymers auf Ethylenbasis (EA), im Bereich von 35 Gew.-% bis 52 Gew.-% und ein Gewichtsmittel des Molekulargewichts ($M_wA$) von weniger als oder gleich 120.000 aufweist; und ein zweites Copolymer auf Ethylenbasis, das Ethylen und mindestens ein $C_3$- bis $C_{20}$-$\alpha$-Olefin-Comonomer umfasst, wobei besagtes zweites Copolymer auf Ethylenbasis einen Gewichtsanteil von aus Ethylen abgeleiteten Einheiten, bezogen auf das Gewicht des zweiten Copolymers auf Ethylenbasis (EB), im Bereich von 65 Gew.-% bis 85 Gew.-% und ein Gewichtsmittel des Molekulargewichts ($Mw_B$) von über 75.000 bis weniger als 130.000 aufweist.

2. Polymerzusammensetzung nach Anspruch 1, wobei mindestens eines des ersten Copolymers auf Ethylenbasis und des zweiten Copolymers auf Ethylenbasis eine im Wesentlichen lineare Struktur aufweist, so dass das erste Copolymer auf Ethylenbasis und/oder das zweite Copolymer auf Ethylenbasis **dadurch gekennzeichnet ist, dass** es weniger als 1 Verzweigungspunkt mit einer Kohlenstoffkette von größer als 19 je 200 Kohlenstoffatomen entlang eines Rückgrats abstehend aufweist.

3. Polymerzusammensetzung nach Anspruch 1 oder 2, wobei das erste Copolymer auf Ethylenbasis in einer Menge von mindestens 33 Gew.-% vorhanden ist, bezogen auf das kombinierte Gewicht des ersten und zweiten Copolymers auf Ethylenbasis.

4. Polymerzusammensetzung nach einem der Ansprüche 1 bis 3, wobei das erste Copolymer auf Ethylenbasis eine Schmelzwärme einer ersten Schmelze des ersten Copolymers auf Ethylenbasis (HA) von weniger als 10 J/g aufweist.

5. Polymerzusammensetzung nach einem der Ansprüche 1 bis 4, wobei mindestens eines des ersten Copolymers auf Ethylenbasis und des zweiten Copolymers auf Ethylenbasis eine Molekulargewichtsverteilung (MWD) von 2,4 oder weniger aufweist.

6. Polymerzusammensetzung nach einem der Ansprüche 1 bis 5, wobei der Gewichtsanteil der von Ethylen abgeleiteten Einheiten des ersten Copolymers auf Ethylenbasis (EA) geringer ist als der Gewichtsanteil der von Ethylen abgeleiteten Einheiten des zweiten Copolymers auf Ethylenbasis (EB).

7. Polymerzusammensetzung nach einem der Ansprüche 1 bis 6, wobei eine Differenz zwischen den Gewichtsprozent der von Ethylen abgeleiteten Einheiten des zweiten Copolymers auf Ethylenbasis (EB) und den Gewichtsprozent der von Ethylen abgeleiteten Einheiten des ersten Copolymers auf Ethylenbasis (EA) größer als oder gleich 17 ist.

8. Polymerzusammensetzung nach einem der Ansprüche 1 bis 7, wobei der Gewichtsanteil des ersten Copolymers auf Ethylenbasis in der Polymerzusammensetzung geringer ist als der Gewichtsanteil des zweiten Copolymers auf Ethylenbasis in der Polymerzusammensetzung, bezogen auf das kombinierte Gewicht der ersten und zweiten Copolymere.

9. Polymerzusammensetzung nach einem der Ansprüche 1 bis 8, wobei das Gewichtsmittel des Molekulargewichts des ersten Copolymers auf Ethylenbasis ($M_wA$) im Bereich von 60.000 bis weniger als 120.000 liegt.

10. Polymerzusammensetzung nach einem der Ansprüche 1 bis 9, wobei ein Gewichtsprozentanteil des ersten Copolymers auf Ethylenbasis kleiner als oder gleich 66 Gew.-% des Gesamtgewichts des ersten Copolymers auf Ethylenbasis und des zweiten Copolymers auf Ethylenbasis ist.

11. Polymerzusammensetzung nach einem der Ansprüche 1 bis 10, wobei von Ethylen abgeleitete Einheiten in der Gesamtmenge des ersten Copolymers auf Ethylenbasis und des zweiten Copolymers auf Ethylenbasis im Bereich von 70 Mol-% bis 85 Mol-% liegen.

12. Polymerzusammensetzung, umfassend:

ein erstes Copolymer auf Ethylenbasis mit einer Schmelzwärme einer ersten Schmelze des ersten Copolymers auf Ethylenbasis (HA) im Bereich von 0 J/g bis 15 J/g und einem Gewichtsmittel des Molekulargewichts ($M_wA$) von weniger als 120.000; und
ein zweites Copolymer auf Ethylenbasis mit einer Schmelzwärme einer ersten Schmelze des zweiten Copolymers auf Ethylenbasis (HB) im Bereich von 30 J/g bis 60 J/g und einem Gewichtsmittel des Molekulargewichts ($M_wB$) von über 75.000 bis weniger als 130.000.

13. Schmierölzusammensetzung, umfassend ein Basisöl; und die Polymerzusammensetzung gemäß einem der Ansprüche 1-12.

14. Schmierölzusammensetzung nach Anspruch 13 mit mindestens einem von: einem TE von größer als oder gleich 1,5; ein SSI von weniger als 55; eine komplexe Viskosität bei -31°C von weniger als oder gleich 500 cSt; und eine Mini-Rotationsviskosimeter-(MRV-)Viskosität bei -35°C in einer 10W-50-Formulierung von weniger als 60.000 cps gemäß ASTM 1678.

15. Verfahren zur Herstellung der Zusammensetzung gemäß einem der Ansprüche 1 bis 12, umfassend die Schritte:

(a) Kombinieren (i) eines ersten Copolymers auf Ethylenbasis mit einem Gewichtsprozentanteil von aus Ethylen abgeleiteten Einheiten, bezogen auf das Gewicht des ersten Copolymers auf Ethylenbasis (EA), im Bereich von 35 Gew.-% bis 52 Gew.-% und einem Gewichtsmittel des Molekulargewichts ($M_wA$) von weniger als 120.000, mit (ii) einem zweiten Copolymer auf Ethylenbasis mit einem Gewichtsprozentanteil von aus Ethylen abgeleiteten Einheiten, bezogen auf das Gewicht des ersten Copolymers auf Ethylenbasis (EB), im Bereich von 65 Gew.-% bis etwa 85 Gew.-% und einem Gewichtsmittel des Molekulargewichts ($M_wB$) von über 75.000 bis weniger als 130.000; und
(b) Bilden der Zusammensetzung.

**Revendications**

1. Composition polymérique, comprenant :

   un premier copolymère à base d'éthylène comprenant de l'éthylène et au moins un comonomère de type alpha-oléfine en $C_3$ à $C_{20}$, ledit premier copolymère à base d'éthylène possédant un pourcentage en poids de motifs issus d'éthylène sur la base du poids du premier copolymère à base d'éthylène (EA) se situant dans la plage de 35 % en poids à 52 % poids et un poids moléculaire moyen en poids (MwA) inférieur à 120 000 ; et
   un deuxième copolymère à base d'éthylène comprenant de l'éthylène et au moins un comonomère de type alpha-oléfine en $C_3$ à $C_{20}$, ledit deuxième copolymère à base d'éthylène possédant un pourcentage en poids de motifs issus d'éthylène sur la base du poids du deuxième copolymère à base d'éthylène (EB) se situant dans la plage de 65 % en poids à 85 % en poids et un poids moléculaire moyen en poids (MwB) de supérieur à 75 000 à inférieur à 130 000.

2. Composition polymérique selon la revendication 1, au moins un parmi le premier copolymère à base d'éthylène et le deuxième copolymère à base d'éthylène possédant une structure sensiblement linéaire, de sorte que le premier copolymère à base d'éthylène et/ou le deuxième copolymère à base d'éthylène est caractérisé comme ayant moins d'1 point de ramification pendant avec une chaîne carbonée plus grande que 19 atomes de carbone pour 200 atomes de carbone le long d'une chaîne principale.

3. Composition polymérique selon la revendication 1 ou 2, le premier copolymère à base d'éthylène étant présent en une quantité d'au moins 33 % en poids, sur la base du poids combiné des premier et deuxième copolymères à base d'éthylène.

4. Composition polymérique selon l'une quelconque des revendications 1 à 3, le premier copolymère à base d'éthylène possédant une chaleur de fusion sur un premier fondu du premier copolymère à base d'éthylène (HA) inférieure à 10 J/g.

5. Composition polymérique selon l'une quelconque des revendications 1 à 4, au moins un parmi le premier copolymère à base d'éthylène et le deuxième copolymère à base d'éthylène possédant une distribution de poids moléculaire (DPM) de 2,4 ou moins.

6. Composition polymérique selon l'une quelconque des revendications 1 à 5, le pourcentage en poids de motifs issus d'éthylène du premier copolymère à base d'éthylène (EA) étant inférieure au pourcentage en poids de motifs issus d'éthylène du deuxième copolymère à base d'éthylène (EB) .

7. Composition polymérique selon l'une quelconque des revendications 1 à 6, une différence entre le pourcentage en poids de motifs issus d'éthylène du deuxième copolymère à base d'éthylène (EB) et le pourcentage en poids de motifs issus d'éthylène du premier copolymère à base d'éthylène (EA) étant supérieure ou égale à 17.

8. Composition polymérique selon l'une quelconque des revendications 1 à 7, le pourcentage en poids du premier copolymère à base d'éthylène dans la composition polymérique étant inférieur au pourcentage en poids du deuxième copolymère à base d'éthylène dans la composition polymérique, sur la base du poids combiné des premier et deuxième copolymères.

9. Composition polymérique selon l'une quelconque des revendications 1 à 8, le poids moléculaire moyen en poids du premier copolymère à base d'éthylène (MwA) se situant dans la plage de 60 000 à inférieur à 120 000.

10. Composition polymérique selon l'une quelconque des revendications 1 à 9, un pourcentage en poids du premier copolymère à base d'éthylène étant inférieur ou égal à 66 % en poids du poids total du premier copolymère à base d'éthylène et du deuxième copolymère à base d'éthylène.

11. Composition polymérique selon l'une quelconque des revendications 1 à 10, les motifs issus d'éthylène dans la quantité totale du premier copolymère à base d'éthylène et du deuxième copolymère à base d'éthylène se situant dans la plage de 70 % en moles à 85 % en moles.

12. Composition polymérique, comprenant :

un premier copolymère à base d'éthylène comprenant de l'éthylène et au moins un comonomère de type alpha-oléfine en $C_3$ à $C_{20}$, ledit premier copolymère à base d'éthylène possédant une chaleur de fusion sur un premier fondu du premier copolymère à base d'éthylène (HA) se situant dans la plage de 0 J/g à 15 J/g et un poids moléculaire moyen en poids (MwA) inférieur à 120 000 ; et

un deuxième copolymère à base d'éthylène comprenant de l'éthylène et au moins un comonomère de type alpha-oléfine en $C_3$ à $C_{20}$, ledit deuxième copolymère à base d'éthylène possédant une chaleur de fusion sur un premier fondu du deuxième copolymère à base d'éthylène (HB) se situant dans la plage de 30 J/g à 60 J/g et un poids moléculaire moyen en poids (MwB) de supérieur à 75 000 à inférieur à 130 000.

13. Composition d'huile lubrifiante comprenant une huile de base ; et la composition polymérique selon l'une quelconque des revendications 1 à 12.

14. Composition d'huile lubrifiante selon la revendication 13, possédant au moins l'un parmi : un TE supérieur ou égal à 1,5 ; un SSI inférieur à 55 ; une viscosité complexe à -31 °C inférieure ou égale à 500 cSt ; et une viscosité avec un miniviscosimètre rotatif (MVR) à -35 °C dans une formulation 10 W-50 inférieure à 60 000 cps selon la norme ASTM 1678.

15. Procédé pour la fabrication de la composition selon l'une quelconque des revendications 1 à 12 comprenant les étapes de :

(a) combinaison (i) d'un premier copolymère à base d'éthylène comprenant de l'éthylène et au moins un comonomère de type alpha-oléfine en $C_3$ à $C_{20}$, ledit premier copolymère à base d'éthylène possédant un pourcentage en poids de motifs issus d'éthylène sur la base du poids du premier copolymère à base d'éthylène (EA) se situant dans la plage de 35 % en poids à 52 % poids et un poids moléculaire moyen en poids (MwA) inférieur à 120 000 avec (ii) un deuxième copolymère à base d'éthylène comprenant de l'éthylène et au moins un comonomère de type alpha-oléfine en $C_3$ à $C_{20}$, ledit deuxième copolymère à base d'éthylène possédant un pourcentage en poids de motifs issus d'éthylène sur la base du poids du deuxième copolymère à base d'éthylène (EB) se situant dans la plage de 65 % en poids à 85 % en poids et un poids moléculaire moyen en poids (MwB) de supérieur à 75 000 à inférieur à 130 000 ; et
(b) formation de la composition.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7402235 B
- US 5391617 A
- EP 0638611 A
- US 5382630 A
- US 5008204 A
- US 5324800 A
- US 5198401 A
- US 5278119 A
- US 5387568 A
- US 5120867 A
- US 5017714 A
- US 4871705 A
- US 4542199 A
- US 4752597 A
- US 5132262 A
- US 5391629 A
- US 5243001 A
- US 5278264 A
- US 5296434 A
- US 5304614 A
- EP 0277003 A
- EP 0277004 A
- WO 9200333 A
- EP 0426637 A
- EP 0573403 A
- EP 0427697 A
- EP 0520732 A
- EP 0495375 A
- EP 0500944 A
- EP 0570982 A1
- EP 0612768 A1
- US 6319998 B
- US 60243192 B
- US 61173528 B
- US 5068047 A
- US 3933659 A
- US 4176074 A
- US 4105571 A
- US 3779928 A
- US 3778375 A
- US 3852205 A
- US 3879306 A
- US 3932290 A
- US 4028258 A
- US 4344853 A
- US 4464493 A

**Non-patent literature cited in the description**

- **L. WILD et al.** Determination of Branching Distributions in Polyethylene and Ethylene Copolymers. *JOURNAL OF POLYMER SCIENCE: POLYMER PHYSICS EDITION,* 1982, vol. 20, 441-455
- **T. SUN ; P. BRANT ; R. R. CHANCE ; W. W. GRAESSLEY.** *MACROMOLECULES,* 2001, vol. 34 (19), 6812-6820
- **M.B. HUGLIN.** LIGHT SCATTERING FROM POLYMER SOLUTIONS. Academic Press, 1971
- **T. SUN ; R. R. CHANCE ; W. W. GRAESSLEY ; D. J. LOHSE.** A Study of the Separation Principle in Size Exclusion Chromatography. *journal MACROMOLECULES,* 2004, vol. 37 (11), 4304-4312
- **T. SUN ; R. R. CHANCE ; W. W. GRAESSLEY ; P. BRANT.** Effect of Short Chain Branching on the Coil Dimensions of Polyolefins in Dilute Solution. *MACROMOLECULES,* 2001, vol. 34 (19), 6812-6820
- **H. N. CHENG, MASAHIRO KAKUGO.** Carbon-13 NMR analysis of compositional heterogeneity in ethylene-propylene copolymers. *MACROMOLECULES,* 1991, vol. 24 (8), 1724-1726
- **C. COZEWITH.** Interpretation of carbon-13 NMR sequence distribution for ethylene-propylene copolymers made with heterogeneous catalysts. *MACROMOLECULES,* 1987, vol. 20 (6), 1237-1244
- **KAKUGO et al.** *MACROMOLECULES,* 1982, vol. 15 (4), 1150-1152
- **C. COZEWITH.** Ver Strate. *MACROMOLECULES,* 1971, vol. 4, 482-489
- **RANDEL, JAMES C.** *MACROMOLECULES,* 1978, vol. 11 (1), 33-36
- **CHENG, H.N.** *MACROMOLECULES,* 1984, vol. 17 (10), 1950-1955
- **RAY, G. JOSEPH ; JOHNSON, PAUL E. ; KNOX, JACK R.** *MACROMOLECULES,* 1977, vol. 10 (4), 773-778